# EUROPEAN PATENT APPLICATION

(11) **EP 2 249 506 A2**
(43) Date of publication of application: **10.11.2010**
(21) Application number: 09714279.8
(22) Date of filing: 27.02.2009
(51) Int. Cl.: H04L 1/18

(54) **METHOD FOR TRANSMITTING ACK/NACK SIGNAL IN WIRELESS COMMUNICATION SYSTEM**

(30) Priority: 29.02.2008 US 32430 P; 29.02.2008 US 32429 P; 12.10.2008 US 104761 P; 21.01.2009 US 145973 P; 23.01.2009 KR 20090005967
(71) Applicant: LG Electronics Inc., Seoul 150-721 (KR)
(72) Inventor: PARK, Hyung Ho, Anyang-si Gyeonggi-do 431-749 (KR); IHM, Bin Chul, Anyang-si Gyeonggi-do 431-749 (KR); CHO, Han Gyu, Anyang-si Gyeonggi-do 431-749 (KR); CHOI, Jin Soo, Anyang-si Gyeonggi-do 431-749 (KR); CHUNG, Jae Hoon, Anyang-si Gyeonggi-do 431-749 (KR); HAN, Jong Young, Anyang-si Gyeonggi-do 431-749 (KR); LEE, Seok Woo, Anyang-si Gyeonggi-do 431-749 (KR); SUNG, Doo-Hyun, Anyang-si Gyeonggi-do 431-749 (KR)
(74) Representative: Cabinet Plasseraud
(86) International application number: PCT/KR2009/000978
(87) International publication number: WO 2009/108020

(57) **Abstract**

A method of transmitting an acknowledgement (ACK)/non-acknowledgement (NACK) signal in a wireless communication system is provided. The method includes: allocating a radio resource; and transmitting the ACK/NACK signal through an ACK channel in a location determined by an index for the radio resource, wherein the radio resource includes at least one resource unit which is a basic unit for resource allocation, the resource unit is at least one of a localized resource unit including subcarriers contiguous in a frequency domain and a distributed resource unit including subcarriers distributed in the frequency domain, an index of the localized resource unit is directly mapped to an index of the ACK channel, and an index of the distributed resource unit is mapped to an index of the ACK channel according to a permutation rule.

## Description

### CROSS-REFERENCE TO RELATED APPLICATIONS

This application claims the benefit of priority of US Provisional application No. 61/032,429 filed on February 29, 2008, US Provisional application No. 61/032,430 filed on February 29, 2008, US Provisional application No. 61/104,761 filed on October 12, 2008, US Provisional application No. 61/145,973 filed on January 21, 2009, and Korean Patent application No. 10-2009-0005967 filed on January 23, 2009, all of which are incorporated by reference in their entirety herein.

### BACKGROUND OF THE INVENTION

### Field of the Invention

The present invention relates to wireless communications, and more particularly, to a method of transmitting an acknowledgement (ACK)/non-acknowledgement (NACK) signal.

### Related Art

An error compensation scheme is used to secure communication reliability. Examples of the error compensation scheme include a forward error correction (FEC) scheme and an automatic repeat request (ARQ) scheme. In the FEC scheme, errors in a receiving end are corrected by attaching an extra error correction code to information bits. In the ARQ scheme, errors are corrected through data retransmission. Examples of the ARQ scheme include a stop and wait (SAW) scheme, a go-back-N (GBN) scheme, a selective repeat (SR) scheme, etc. The SAW scheme transmits a frame after determining whether the transmitted frame is correctly received. The GBN scheme transmits N consecutive frames, and if transmission is unsuccessful, retransmits all frames transmitted after an erroneous frame.
The SR scheme selectively retransmits only the erroneous frame.

The FEC scheme has an advantage in that a time delay is small and no information is additionally exchanged between a transmitting end and a receiving end but also has a disadvantage in that system efficiency deteriorates in a good channel environment. The ARQ scheme has an advantage in that transmission reliability can be increased but also has a disadvantage in that a time delay occurs and system efficiency deteriorates in a poor channel environment. To solve such disadvantages, a hybrid automatic repeat request (HARQ) scheme is proposed by combining the FEC scheme and the ARQ scheme. In the HARQ scheme, it is determined whether an unrecoverable error is included in data received by a physical layer, and retransmission is requested upon detecting the error, thereby improving performance.

A receiver using the HARQ scheme basically attempts error correction on received data, and determines whether the data will be retransmitted by using an error detection code. The error detection code may be a cyclic redundancy check (CRC). When an error of the received data is detected in a CRC detection process, the receiver transmits a non-acknowledgement (NACK) signal to a transmitter. Upon receiving the NACK signal, the transmitter transmits relevant retransmission data according to an HARQ mode. The receiver receives the retransmission data and then performs decoding by combining the retransmission data with previous data. As a result, reception performance is improved.

The HARQ mode can be classified into a chase combining mode and an incremental redundancy (IR) mode. In the chase combining mode, to obtain a signal-to-noise ratio (SNR) gain, error-detected data is combined with retransmitted data instead of discarding the error-detected data. In the IR mode, additional redundant information is incrementally transmitted with retransmitted data to reduce overhead resulted from retransmission and to obtain a coding gain.

According to a transmission attribute, the HARQ can be classified into an adaptive HARQ and a non-adaptive HARQ. The transmission attribute includes a resource allocation, a modulation scheme, a transport block size, etc. In the adaptive HARQ, depending on changes in a channel condition, the transmission attributes are entirely or partially changed by comparing transmission attributes used for retransmission with transmission attributes used for initial transmission. In the non-adaptive HARQ, the transmission attributes used for the initial transmission are persistently used irrespective of the changes in the channel condition.

An HARQ-based retransmission scheme can be classified into a synchronous HARQ and an asynchronous HARQ. The synchronous HARQ retransmits data at a time point known to both the transmitter and the receiver. In the synchronous HARQ, signaling required to transmit data such as an HARQ processor number can be reduced. The asynchronous HARQ allocates resources for retransmission at an arbitrary time point. In the asynchronous HARQ, overhead occurs due to signaling required for data transmission.

With the development of communication techniques, a structure of a radio resource has been further subdivided in a frequency domain and a time domain, which leads to the increase in transmission of an ACK/NACK signal for data transmission. A large number of ACK/NACK signals have to be transmitted without delay by further effectively using limited radio resources.

Accordingly, there is a need for a method of effectively transmitting a large number of ACK/NACK signals.

### SUMMARY OF THE INVENTION

The present invention provides a method of effectively transmitting a plurality of acknowledgement (ACK)/non-acknowledgement (NACK) signals.

According to an aspect of the present invention, a method of transmitting an ACK/NACK signal in a wireless communication system is provided. The method includes: allocating a radio resource; and transmitting the ACK/NACK signal through an ACK channel in a location determined by an index for the radio resource, wherein the radio resource includes at least one resource unit which is a basic unit for resource allocation, the resource unit is at least one of a localized resource unit including subcarriers contiguous in a frequency domain and a distributed resource unit including subcarriers distributed in the frequency domain, an index of the localized resource unit is directly mapped to an index of the ACK channel, and an index of the distributed resource unit is mapped to an index of the ACK channel according to a permutation rule.

According to another aspect of the present invention, a method of transmitting an ACK/NACK signal in a wireless communication system is provided. The method includes: transmitting and receiving data by using a radio resource; and receiving the ACK/NACK signal through an ACK channel indicated by index information of the radio resource, wherein the radio resource includes at least one resource unit which is a basic unit for resource allocation, the resource unit is at least one of a localized resource unit including subcarriers contiguous in a frequency domain and a distributed resource unit including subcarriers distributed in the frequency domain, and an index of the ACK channel is directly mapped from an index of the localized resource unit and is mapped by being permutated from an index of the distributed resource unit.

According to another aspect of the present invention, a method of transmitting an ACK/NACK signal using a frame including a plurality of downlink subframes and a plurality of uplink subframes in a wireless communication system is provided. The method includes: transmitting data by using the uplink subframe; and receiving the ACK/NACK signal for the data through an ACK channel included in the plurality of downlink subframes, wherein the ACK channel is included by multiplexing ACK channels for the plurality of user, and the ACK channels for the plurality of users are identified according to a resource block allocated to the users.

### BRIEF DESCRIPTION OF THE DRAWINGS

FIG. 1 shows a wireless communication system.
FIG. 2 shows an example of a frame structure.
FIG. 3 shows an example of a subchannel structure.
FIG. 4 shows an example of resource unit mapping.
FIG. 5 shows data transmission using hybrid automatic repeat request (HARQ).
FIG. 6 shows a method of 'control block based linkage of acknowledgement (ACK)/non-acknowledgement (NACK)' according to an embodiment of the present invention.
FIG. 7 shows a method of 'resource unit (RU) based linkage of ACK/NACK' according to another embodiment of the present invention.
FIG. 8 shows mapping of a logical resource unit onto an ACK channel index according to an embodiment of the present invention.
FIG. 9 shows mapping of a localized resource unit and a distributed resource unit onto an ACK channel index according to an embodiment of the present invention.
FIG. 10 shows a process for transmitting an ACK/NACK signal of multiple users according to an embodiment of the present invention.
FIG. 11 shows encoding of an ACK channel according to an embodiment of the present invention.
FIG. 12 shows grouping of ACK channels of multiple users according to an embodiment of the present invention.
FIG. 13 shows orthogonal sequence combination of an ACK channel group according to an embodiment of the present invention.
FIG. 14 shows an ACK channel allocated to a distributed resource unit according to an embodiment of the present invention.
FIG. 15 shows an ACK channel allocated to a distributed resource unit according to another embodiment of the present invention.
FIG. 16 shows a structure of a downlink ACK channel according to an embodiment of the present invention.
FIG. 17 shows a structure of a downlink ACK channel according to another embodiment of the present invention.
FIG. 18 shows a structure of a downlink ACK channel according to another embodiment of the present invention.
FIG. 19 shows a structure of a downlink ACK channel according to another embodiment of the present invention.
FIG. 20 shows a structure of a downlink ACK channel according to another embodiment of the present invention.
FIG. 21 shows a structure of a downlink ACK channel according to another embodiment of the present invention.
FIG. 22 shows a structure of a downlink ACK channel according to another embodiment of the present invention.
FIG. 23 shows a structure of a downlink ACK channel according to another embodiment of the present invention.
FIG. 24 shows a structure of a downlink ACK channel according to another embodiment of the present invention.
FIG. 25 shows a structure of a downlink ACK channel according to another embodiment of the present invention.
FIG. 26 shows a structure of a downlink ACK channel according to another embodiment of the present invention.
FIG. 27 shows a structure of a downlink ACK channel according to another embodiment of the present invention.
FIG. 28 shows a structure of a downlink ACK channel according to another embodiment of the present invention.
FIG. 29 shows resource allocation for an HARQ mode based on channel quality indication (CQI) feedback according to an embodiment of the present invention.
FIG. 30 shows a structure of a downlink ACK channel according to another embodiment of the present invention.
FIG. 31 shows a method of allocating a downlink ACK channel according to an embodiment of the present invention.
FIG. 32 shows a compression method for an ACK channel according to an embodiment of the present invention.
FIG. 33 shows a compression method for an ACK channel according to another embodiment of the present invention.
FIG. 34 shows mapping of an ACK channel using control information according to an embodiment of the present invention.
FIG. 35 shows mapping of an ACK channel using control information according to another embodiment of the present invention.
FIG. 36 shows sub-MAP transmission according to an embodiment of the present invention.
FIG. 37 is a graph for comparing system performance depending on a channel estimation scheme according to an embodiment of the present invention.
FIG. 38 shows a graph for comparing system performance depending on a channel estimation scheme according to another embodiment of the present invention.
FIG. 39 shows a graph for comparing system performance depending on a channel estimation scheme according to another embodiment of the present invention.
FIG. 40 is a graph for comparing performance in a chase combining (CC) mode and an incremental redundancy (IR) mode according to an embodiment of the present invention.
FIG. 41 is a graph for comparing performance in a CC mode and an IR mode according to another embodiment of the present invention.
FIG. 42 shows an example of a processing delay in downlink HARQ according to a frame structure.
FIG. 43 shows a structure of an uplink ACK channel according to an embodiment of the present invention.
FIG. 44 shows a structure of an uplink ACK channel according to another embodiment of the present invention.
FIG. 45 shows a structure of an uplink ACK channel according to another embodiment of the present invention.
FIG. 46 shows a structure of an uplink ACK channel according to another embodiment of the present invention.
FIG. 47 shows a configuration of an uplink ACK channel according to another embodiment of the present invention.
FIG. 48 shows a configuration of an uplink ACK channel according to another embodiment of the present invention.
FIG. 49 shows a configuration of an uplink ACK channel according to another embodiment of the present invention.
FIG. 50 shows a configuration of an uplink ACK channel according to another embodiment of the present invention.
FIG. 51 shows a configuration of an uplink ACK channel according to another embodiment of the present invention.
FIG. 52 shows a configuration of an uplink channel according to another embodiment of the present invention.
FIG. 53 shows a configuration of an uplink ACK channel according to another embodiment of the present invention.
FIG. 54 shows a configuration of an uplink ACK channel according to another embodiment of the present invention.
FIG. 55 shows a configuration of an uplink ACK channel according to another embodiment of the present invention.
FIG. 56 shows a configuration of an uplink ACK channel according to another embodiment of the present invention.
FIG. 57 shows a configuration of an uplink ACK channel according to another embodiment of the present invention.
FIG. 58 shows a configuration of an uplink ACK channel according to another embodiment of the present invention.
FIG. 59 shows a configuration of an uplink ACK channel according to another embodiment of the present invention.
FIG. 60 shows a frame structure capable of performing fast HARQ according to an embodiment of the present invention.
FIG. 61 shows a frame structure capable of performing fast HARQ according to another embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. The UTRA is a part of a universal mobile telecommunication system (UMTS). 3^{rd} generation partnership project (3GPP) long term evolution (LTE) is a part of an evolved UMTS (E-UMTS) using the E-UTRA. The 3GPP LTE uses the OFDMA in DL and uses the SC-FDMA in UL. IEEE 802.16m is an evolution of IEEE 802.16e.

Although the following description will focus on the IEEE 802.16m for clarity of explanation, the technical features of the present invention are not limited thereto.

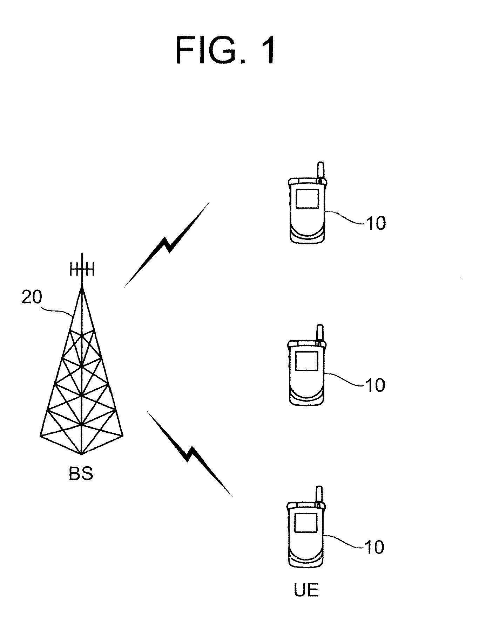

FIG. 1 shows a wireless communication system.

Referring to FIG. 1, the wireless communication system includes at least one base station (BS) 20. The BSs 20 provide communication services to specific geographical regions (generally referred to as cells). Each cell can be divided into a plurality of regions (referred to as sectors). A user equipment (UE) 10 may be fixed or mobile, and may be referred to as another terminology, such as a mobile station (MS), a user terminal (UT), a subscriber station (SS), a wireless device, a personal digital assistant (PDA), a wireless modem, a handheld device, etc. The BS 20 is generally a fixed station that communicates with the UE 10 and may be referred to as another terminology, such as an evolved node-B (eNB), a base transceiver system (BTS), an access point, etc.

Hereinafter, a downlink (DL) denotes a communication link from the BS to the UE, and an uplink (UL) denotes a communication link from the UE to the BS. In the DL, a transmitter may be a part of the BS, and a receiver may be a part of the UE. In the UL, the transmitter may be a part of the UE, and the receiver may be a part of the BS.

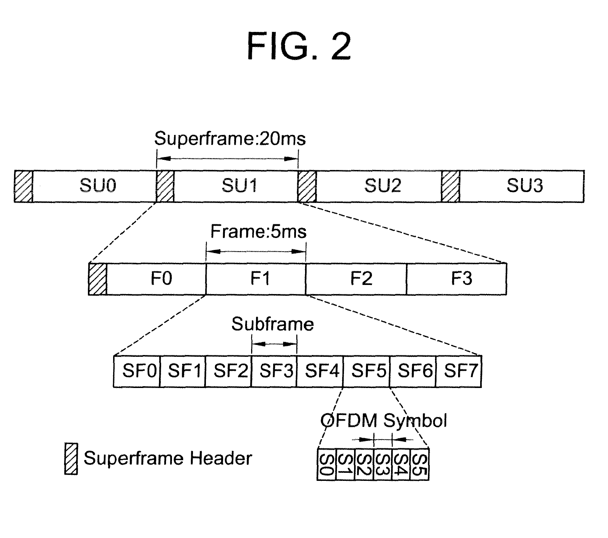

FIG. 2 shows an example of a frame structure.

Referring to FIG. 2, a superframe includes a superframe header and four radio frames F0, F1, F2, and F3. Although it is shown that each superframe has a size of 20 milliseconds (ms) and each frame has a size of 5 ms, the present invention is not limited thereto. The superframe header may be located at a front-most position of the superframe. A common control channel is assigned to the superframe header. The common control channel is used to transmit information regarding frames constituting the superframe or control information (e.g., system information) that can be commonly utilized by all UEs within a cell.

One frame includes 8 subframes SF0, SF1, SF2, SF3, SF4, SF5, SF6, and SF7. Each subframe can be used for UL or DL transmission. Each subframe may consist of 6 or 7 orthogonal frequency division multiplexing (OFDM) symbols, but this is for exemplary purposes only. Time division duplexing (TDD) or frequency division duplexing (FDD) may be applied to the frame. In the TDD, each subframe is used in UL or DL transmission at the same frequency and at a different time. That is, subframes included in a TDD frame are divided into a UL subframe and a DL subframe in a time domain. In the FDD, each subframe is used in UL or DL transmission at the same time and at a different frequency. That is, subframes included in an FDD frame are divided into a UL subframe and a DL subframe in a frequency domain. UL transmission and DL transmission occupy different frequency bands and can be simultaneously performed.

A subframe includes at least one frequency partition. The frequency partition consists of at least one physical resource unit (PRU). The frequency partition may include a localized PRU and/or a distributed PRU. The frequency partition may be used for other purposes such as a fractional frequency reuse (FFR) or a multicast or broadcast service (MBS).

The PRU is defined as a basic physical unit for allocating resources including a plurality of consecutive OFDM symbols and a plurality of consecutive subcarriers. The number of OFDM symbols included in the PRU may be equal to the number of OFDM symbols included in one subframe. For example, when one subframe consists of 6 OFDM symbols, the PRU may be defined with 18 subcarriers and 6 OFDM symbols. A logical resource unit (LRU) is a basic logical unit for distributed resource allocation and localized resource allocation. The LRU is defined with a plurality of OFDM symbols and a plurality of subcarriers, and includes pilots used in the PRU. Therefore, one LRU includes a specific number of subcarriers, where the specific number depends on the number of allocated pilots.

A logical distributed resource unit (DRU) may be used to obtain a frequency diversity gain. The DRU includes a distributed subcarrier group in one frequency partition. The DRU has the same size as the PRU. One subcarrier is a basic unit for constituting the DRU.

A logical contiguous resource unit (CRU) may be used to obtain a frequency selective scheduling gain. The CRU includes a localized subcarrier group. The CRU has the same size as the PRU.

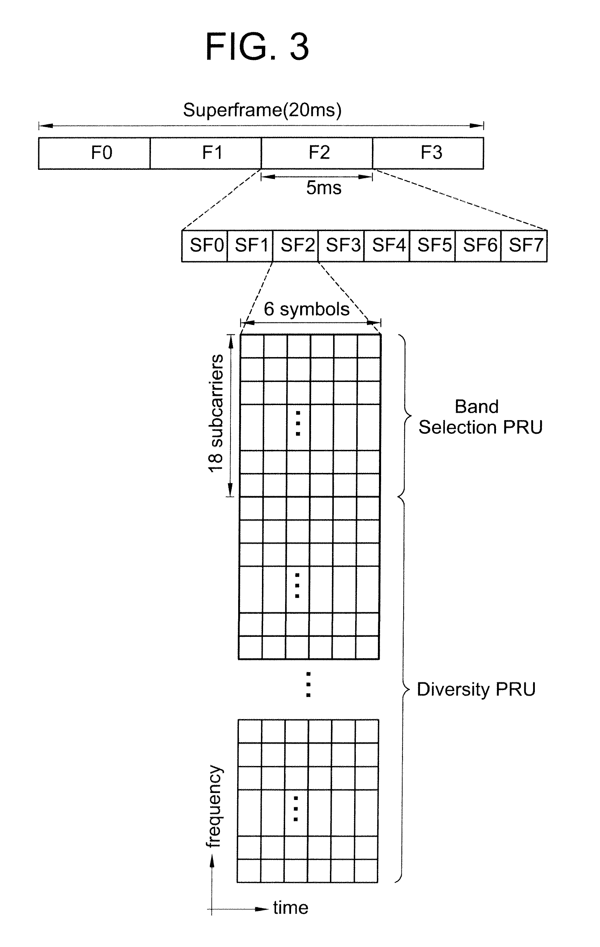

FIG. 3 shows an example of a subchannel structure.

Referring to FIG. 3, a basic unit of a subchannel is a physical resource unit (PRU). For example, one PRU consists of 18 subcarriers × 6 OFDM symbols. The subchannel may include at lease one or more PRUs. The subchannel may have a structure in which a band selection PRU and a diversity PRU occupy different frequency bands in one subframe.

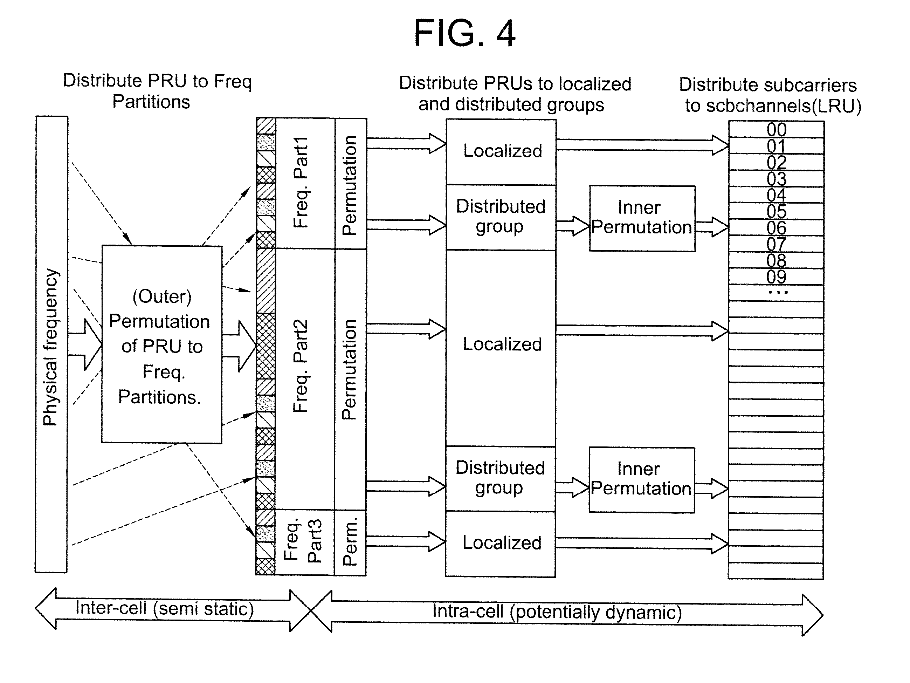

FIG. 4 shows an example of resource unit mapping. A plurality of subcarriers on one OFDM symbol are divided into at least one PRU. Each PRU includes a pilot subcarrier and a data subcarrier.

Referring to FIG. 4, an outer permutation is applied to the PRU. The outer permutation is applied in a unit of at least one or more PRUs. Direct mapping of the outer permutation is supported by only a CRU.

In addition, a rearranged PRU is distributed to frequency partitions. The frequency partition is divided into a DRU and a CRU for each resource group. A sector-specific permutation may be supported. Direct mapping of resources may be supported for localized resources. A size of distributed/localized resources may be flexibly determined for each sector. Next, localized and distributed groups are mapped to the LRU.

An inner permutation is defined for distributed resource allocation in one frequency partition, and is used to spread subcarriers of the DRU throughout the entire distributed resource allocation. A granularity of the inner permutation is equal to a basic unit for constituting the DRU. If it is assumed that N LRUs exist in one distributed group, P permutation sequences are provided. Sub-channelization for a distributed resource allows subcarriers of the LRU to be spread with a full available bandwidth of the distributed resource. There is no inner permutation for localized resource allocation. The PRU is directly mapped to the CRU in each frequency partition.

Hereinafter, data transmission using HARQ and a configuration of an ACK channel for the data transmission will be described. The ACK channel is a channel for transmitting an ACK signal or a NACK signal. The ACK signal can carry at least one ACK/NACK signal. The ACK channel includes at least one OFDM symbol in a time domain and at least one subcarrier in a frequency domain. In one ACK channel, a plurality of ACK/NACK signals can be multiplexed using frequency division multiplexing (FDM), time division multiplexing (TDM), or code division multiplexing (CDM).

For convenience of explanation, an IEEE 802.16m system is simply referred to as '16m', and an IEEE 802.16e system is simply referred to as '16e'. For example, an ACK channel for the IEEE 802.16m system is referred to as a 16m ACK channel, and an ACK channel for the IEEE 802.16e system is referred to as a 16e ACK channel. The 16m system is a system supporting backward compatibility with the 16e system. The 16e system is a legacy system used before an evolved system. Although the 16m system and the 16e system are described herein for example, the technical features of the present invention can also apply to ACK channels of the legacy system and the evolved system supporting backward compatibility with the legacy system.

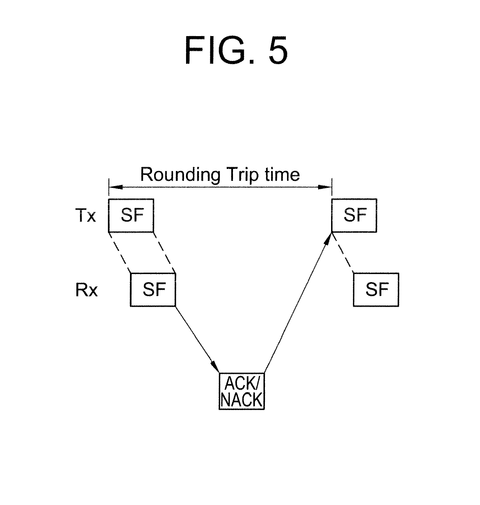

FIG. 5 shows data transmission using HARQ.

Referring to FIG. 5, a transmission time interval (TTI) is a time required to transmit one subframe. That is, one TTI corresponds to one subframe. A round trip time (RTT) is defined as a time duration between a time at which data is transmitted through one subframe by a transmitter Tx and a time immediately before data is retransmitted upon receiving an ACK/NACK signal for the subframe from a receiver Rx. The RTT includes a processing delay defined as a time required for data processing in the transmitter Tx and the receiver Rx.

A control channel for transmitting an ACK/NACK signal on UL transmission in which the transmitter is a UE and the receiver is a BS is referred to as a DL ACK channel. A control channel for transmitting an ACK/NACK signal for DL transmission in which the transmitter is the BS and the receiver is the UE is referred to as a UL ACK channel.

First, the DL ACK channel will be described.

Multiplexing capability and required target quality are considered when configuring the DL ACK channel. According to the multiplexing capability and the required target quality, a multiplexing scheme, a modulation order, a spreading factor (SF) of an orthogonal sequence, a repetition rate, etc., are determined. The modulation scheme depending on the number of users to be multiplexed, the multiplexing scheme depending on the modulation scheme, the repetition rate for a radio resource allocated to the ACK channel are obtained.

For example, when two ACK channels are multiplexed, binary phase shift key (BPSK) can be used as the modulation scheme, CDM or hybrid CDM/FDM can be used as the multiplexing scheme, and SF=2 can be used as a spreading factor. Various sequences such as a Walsh code, a constant amplitude zero auto-correlation (CAZAC) sequence, a discrete Fourier transform (DFT) sequence, etc., can be used as the orthogonal sequence, and there is no restriction on a type of the orthogonal sequence. The number of ACK channel groups is determined by (the total number of required ACK channels)/(the number of multiplexed ACK channels.). The number of tones required per ACK channel group is determined by (the total available tones)/(the number of ACK channel groups). The repetition rate is determined by (the number of tones required per ACK channel group)/(the number of tones required for corresponding modulation scheme (BPSK) and SF). The tone consists of one subcarrier and one OFDM symbol.

For another example, K ACK channels can be multiplexed using CDM or hybrid CDM/FDM. When BPSK is used as the modulation scheme, a spreading factor SF=K can be determined without multiplexing of an I/Q channel, or a spreading factor SF=K/2 can be determined with multiplexing of the I/Q channel. Herein, K>2. The number of ACK channel groups is determined by (the total number of required ACK channels)/(the number of multiplexed ACK channels). The number of tones required per ACK channel group is determined by (the total available tones)/(the number of ACK channel groups). The repetition rate is determined by (the number of tones required per ACK channel group)/(SF/M), where M is the modulation order.

### <DL ACK channel index mapping>

An explicit mapping method and an implicit mapping method are provided as a method of reporting a structure in which an ACK/NACK signal is mapped to a DL ACK channel. The explicit mapping method is a method of reporting a location, size, or the like of the DL ACK channel by using a control signal. The implicit mapping is a method of transmitting the ACK/NACK signal through the DL ACK channel in a location determined according to a UL MAP message or a resource block. The explicit mapping method and the implicit mapping method can also apply to an index mapping method of a UL ACK channel.

### (1) Explicit mapping method

In a common control channel which is a non-user specific region, a size of an ACK channel to which an ACK/NACK signal of a specific user is mapped among a plurality of users is reported using a control signal. Information on the ACK channel to which the ACK/NACK signal is mapped is referred to as ACK/NACK feedback information. For example, a size of the ACK channel of the user can be any one value in the range of 0 to 48. When considering a scheduling granularity, one resource block can be allocated to one UE. In this case, the total number of required ACK channels may be 48.

Alternatively, the ACK channel can be allocated by reserving the number of ACK channels that can be allocated in an actual environment. For example, if 16 ACK channels are reserved, a control field indicating 4-bit resource allocation information can be allocated to the common control channel region. Alternatively, in order to support 32 ACK channels, a 5-bit control field can be allocated to the common control channel region. When a 6-bit control field is allocated for ACK channel allocation in the common control channel region, among all values of the control field, 48 values can be used to indicate a size of the ACK channel and the remaining 16 values can be used for other usages for other control channels.

When N ACK channels are allocated, information on ACK/NACK feedback information of a corresponding UE can be explicitly included (where N is an integer greater than 0). In this case, a location of the ACK/NACK feedback information of the UE can be explicitly expressed by using M bits of control field values of the N ACK channels (where M is an integer greater than 0). For example, when 16 ACK channels are supported, the ACK/NACK feedback information of the UE can be signaled by using 4 bits. When 32 ACK channels are supported, the ACK/NACK feedback information of the UE can be signaled by using 5 bits. That is, when L ACK channels are supported, the ACK/NACK feedback information of the UE can be signaled by using log2 L bits.

Size information of the ACK/NACK channel can be signaled for the purpose of satisfying ACK/NACK channel's transmission quality required for each provided service. For this, a size of the ACK/NACK channel can be regulated by signaling a repetition number corresponding to a repetition rate. The repetition rate for regulating the size of the ACK channel can be applied either in a bit unit or a symbol unit.

Location and size information of the ACK channel can be indicated together through a common control channel or a separate control channel. Examples of the separate control channel include a broadcast channel (BCH), a primary broadcast channel (P-BCH), a secondary broadcast channel (S-BCH), an additional broadcast channel (ABI), etc. Names of these control channels are not limited thereto, and thus all channels for performing the aforementioned function can also be used.

### (2) Implicit mapping method

Examples of a method of implicitly mapping an ACK/NACK signal include: (a) a method of mapping the ACK/NACK signal of a corresponding UE according to a UL MAP message (or a control channel corresponding to the UL MAP message); and (b) a method of mapping the ACK/NACK signal according to a resource block allocated to the UE through resource allocation. In case of initial transmission, an ACK channel to which the ACK/NACK signal of the UE is mapped can be implicitly indicated according to a location of a control channel allocated to the UE.

The method of mapping the ACK/NACK signal of the UE according to the UL MAP message is referred to as a method of 'control block based linkage of ACK/NACK', and the method of mapping the ACK/NACK signal according to the resource block is referred to as a method of 'resource unit (RU) based linkage of ACK/NACK'.

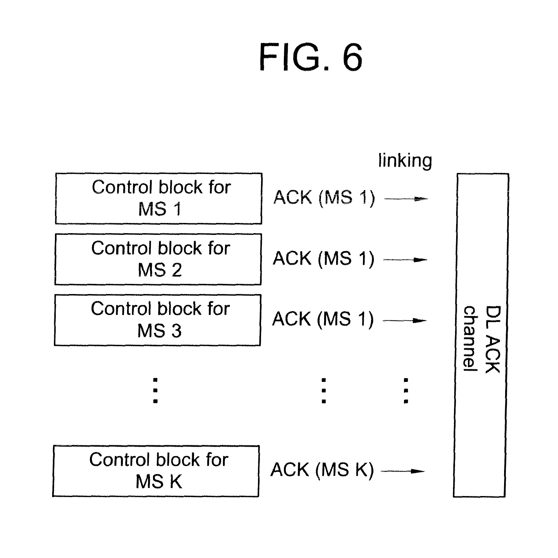

FIG. 6 shows a method of 'control block based linkage of ACK/NACK' according to an embodiment of the present invention.

Referring to FIG. 6, the method of 'control block based linkage of ACK/NACK' is a method in which a DL ACK channel of an MS is mapped according to a UL control block allocated to the MS. That is, in this method, information of the UL control block allocated to the MS indicates the DL ACK channel of the MS. Each MS can find its ACK channel from the DL ACK channel by using information on the UL control block allocated to the MS itself. Examples of information on a control block include an index of a frame or subframe to which the control block belongs, a location index of the control block in the frame or the subframe, an index of a resource unit (or a resource block) corresponding to the control block, a location index of a tile constituting a resource unit, etc. Meanwhile, in DL HARQ, a DL control block can also indicate a UL ACK channel of the MS for a UL ACK channel.

The method of 'control block based linkage of ACK/NACK' has a difficulty in that it is not supported in persistent scheduling in which a control signal is not used similarly to VoIP, and since an additional control block is required for ACK/NACK linkage, signaling overhead may increase.

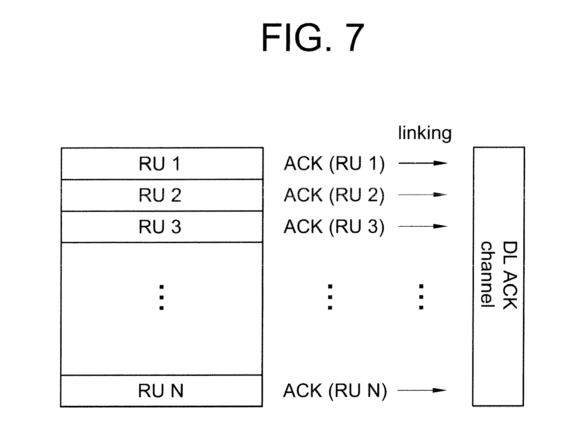

FIG. 7 shows a method of 'RU based linkage of ACK/NACK' according to another embodiment of the present invention.

Referring to FIG. 7, the method of 'RU based linkage of ACK/NACK' is a method in which a DL ACK channel of an MS is mapped according to a UL or DL resource unit allocated to the MS. That is, in this method, information of the UL or DL resource unit allocated to the MS indicates the DL ACK channel of the MS. The MS can find its ACK channel from the DL ACK channel by using the information on the UL or DL resource unit allocated to the MS itself.

Examples of information on the UL or DL resource unit include an index of a frame or subframe to which a resource unit allocated to the MS belongs, an index of a resource unit or resource block allocated to the MS in the frame or the subframe, a location index of a tile constituting the resource unit, etc. In the method of 'RU based linkage of ACK/NACK', ACK/NACK linkage can be performed by scheduling a radio resource to the MS, and a resource of the ACK channel can be determined variously according to a system parameter such as a system bandwidth or the number of data streams in MU-MIMO.

When data is retransmitted in UL HARQ, the ACK/NACK signal may be mapped by using a UL MAP message if the MAP message is transmitted, and the ACK/NACK signal may be mapped according to a resource block if the MAP message is not transmitted. However, the present invention is not limited to such a mapping method.

### <DL ACK channel index mapping considering DRU>

Resource mapping considering resource allocation of data can consider DRU allocation, and a frequency selective diversity gain can be obtained by using the DRU allocation. Further, an inner permutation rule can be applied to a DL ACK channel. The inner permutation rule can be applied in configuration of the DL ACK channel, and two-tone paring can be taken into account.

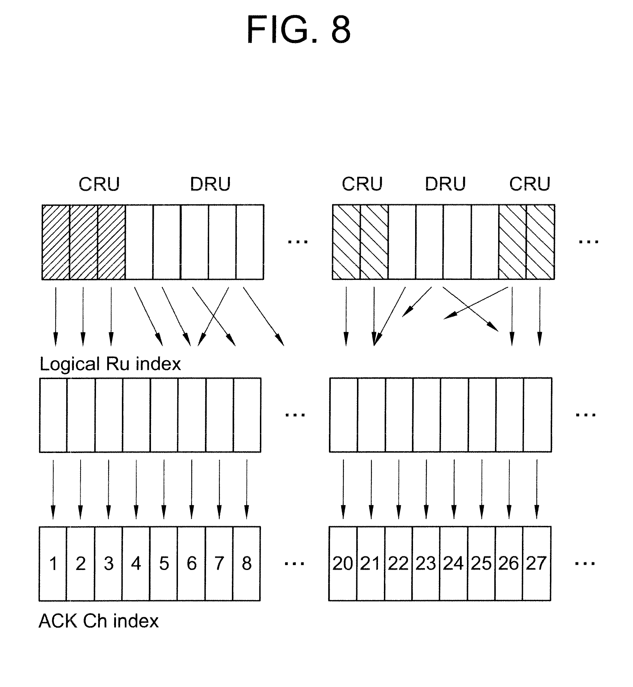

FIG. 8 shows mapping of an LRU onto an ACK channel index according to an embodiment of the present invention.

Referring to FIG. 8, the LRU can be linked to the ACK channel index. When resource scheduling is performed on an MS by using an index of the LRU, a DL ACK/NACK signal can be linked to an index of an LRU allocated to the MS. An index of a localized resource unit (hereinafter, also referred to as a contiguous resource unit (CRU)) can be directly mapped to the index of the LRU. A DRU can be mapped to the index of the LRU by being permutated according to the permutation rule. The index of the LRU can be directly mapped to the index of the ACK channel. The index of the ACK channel can be linked to the index of the CRU and the index of the DRU by using the index of the LRU.

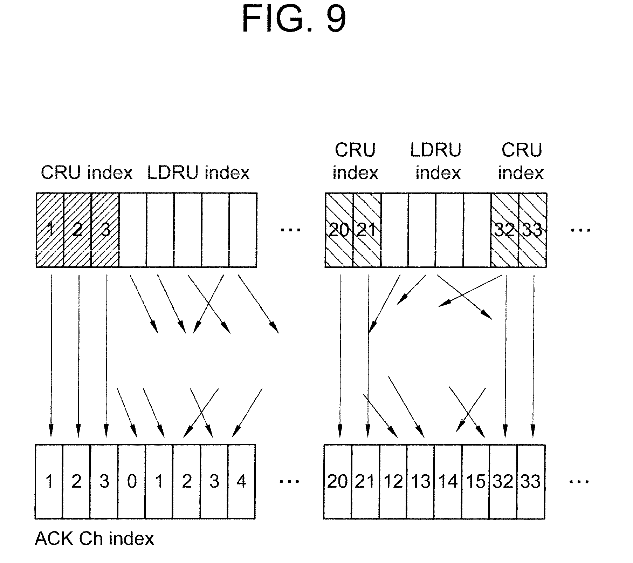

FIG. 9 shows mapping of a CRU and a DRU onto an ACK channel index according to an embodiment of the present invention.

Referring to FIG. 9, an index of the CRU can be directly mapped to an index of a corresponding physical resource unit. An index of the DRU can be allocated according to an index of an LRU. Since the number of LRUs and the number of physical resource units are equal to each other, the index of the LRU in association with the DRU can be directly linked to an index of an ACK channel remaining after directly linking the index of the CRU to the index of the ACK channel. The index of the ACK channel can be classified into an index to be linked to the index of the CRU and an index to be linked to the index of the DRU.

When the ACK/NACK signal is mapped to a resource element, the followings can be considered. (1) The ACK/NACK signal to be multiplexed can be allocated by being distributed to the LRU. (2) The resource element for the ACK/NACK signal can be based on a 1/2 LRU. (3) A DL ACK channel can be multiplexed to another user's specific control channel and a frequency domain by considering an aspect of resource allocation and power control. (4) As a resource element for the ACK channel, a 1/2 DRU (or 1/2 LRU) can be required in a 5MHz system bandwidth including 24 ACK channels, 1 DRU (or 1 LRU) can be required in a 10MHz system bandwidth including 48 ACK channels, and 2 DRUs (or 2 LRUs) can be required in a 20MHz system bandwidth including 96 ACK channels. A resource element for the ACK channel required in a corresponding system bandwidth can control its size by using the aforementioned control channels. In addition, as a method of regulating the size of the ACK channel, the methods proposed in the explicit linkage method of the ACK channel can be directly used.

In an aspect of maintaining power balance, it is effective to multiplex the ACK channel with another control channel and a data channel by using FDM. In this case, the ACK channel can be allocated by being distributed throughout the entire frequency domain within a frequency partition. The frequency partition can be determined by being classified according to a frequency reuse N. The number of frequency partitions depending on N is not limited. Further, the ACK channel can be configured only in a specific frequency partition. Since ACK/NACK signals for a plurality of users are transmitted by being multiplexed and mapped to the ACK channel, there is a need to determine a resource allocation and multiplexing method for the ACK channel so as to minimize interference to another cell.

### <ACK channel mapping on multiple users>

In UL data transmission of UL MU-MIMO, the same resource can be allocated to a plurality of users. In UL MU-MIMO, identical ACK channel indices can be paired and linked to two MSs. There is a need for a method of differently indicating the paired ACK channel indices of the MSs. When ACK channels of the plurality of MSs are paired, resources for the ACK channels can be reduced.

In the method of 'RU based linkage of ACK/NACK', an ACK channel for a plurality of users can be identified according to a resource unit allocated to the users. An ACK/NACK signal of a corresponding MS can be mapped to one of ACK channels included in an ACK channel group according to a first resource unit among resource units allocated to the MS. The MS can find an ACK channel included in an ACK channel group to which the MS belongs by using an index of the first resource unit, and can receive an ACK/NACK signal sent by a BS through the ACK channel. A resource unit used as a criterion is not limited to the first resource unit, and the MS can find the ACK/NACK signal through the ACK channel included in the ACK channel group on the basis of any resource unit among allocated resource units. Meanwhile, even if a method of managing ACK channels by grouping them into several ACK channel groups is not applied, the ACK/NACK signal can be mapped to the first resource unit of the resource unit allocated to the MS or a resource unit indicated on the basis of any resource unit. The number of ACK channel groups can be indicated by using higher-layer signaling or can be indicated implicitly.

Paired MSs to which the same resource is allocated can be allocated to ACK channels by classifying ACK/NACK feedback information for the MSs according to a pattern index of pilot symbols allocated for UL data transmission and an identifier equivalent to the pattern index. In addition, the ACK/NACK feedback information for the MSs can be classified and allocated to ACK channels by using a code division multiplexing sequence index allocated in UL data transmission and an identifier equivalent to the code division multiplexing sequence index.

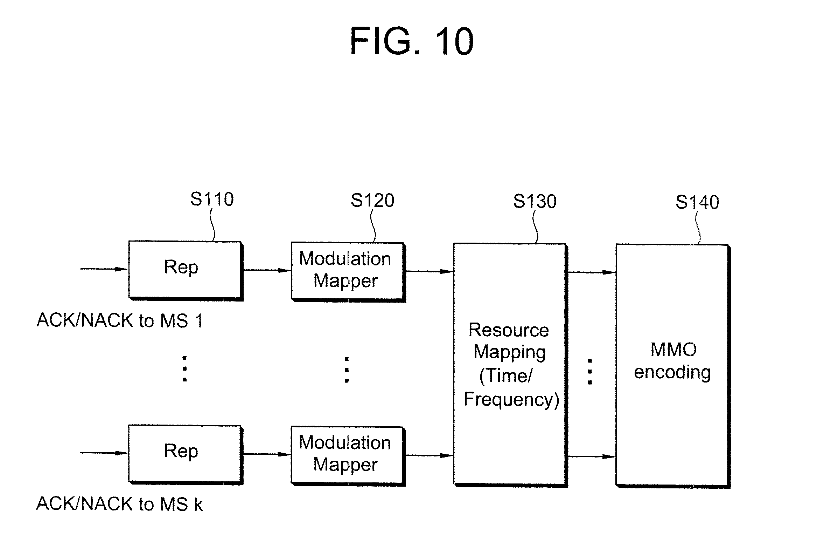

FIG. 10 shows a process for transmitting an ACK/NACK signal of multiple users according to an embodiment of the present invention.

Referring to FIG. 10, a repetition process is performed on each of ACK/NACK signals of a plurality of users (step S110). The repetition process can be determined according to multiplexing capability of an ACK channel. A repetition rate can vary depending on a system requirement and a service type. How many repetitions will be performed can be signaled through a control channel. When an index of a DL ACK channel is mapped to each resource unit allocated to an MS, reliability of ACK/NACK feedback information sent using all resource units can be enhanced by using soft combining. A modulation order can also change according to the system requirement and the service type. Determination on the modulation order can be indicated by using implicit or explicit signaling. When ACK channels of a plurality of users constitute the DL ACK channel, the ACK channels can be transmitted by performing joint coding.

The ACK/NACK signal on which the repetition process is performed is arranged to a symbol for representing a location on a signal constellation by applying a modulation scheme depending on a channel state by a modulation mapper (step S120). The modulation order can be determined according to multiplexing capability of the ACK channel. When a multiplexing rate of the ACK/NACK signal is K, i.e., when K ACK/NACK bits are multiplexed by modulation mapping, a repetition number can be determined as follows.
repetition number = (the number of subcarriers - the number of pilot subcarriers)/(the total number of ACK channels/K)

When considering the multiplexing capability of the ACK channel and an available resource unit, the ACK channel can use a QPSK modulation scheme and a repetition rate 2. However, there is no restriction on the modulation scheme, and thus the modulation scheme may be m-phase shift keying (m-PSK) or m-quadrature amplitude modulation (m-QAM). For example, the m-PSK may be BPSK, QPSK, or 8-PSK, and the m-QAM may be 16-QAM, 64-QAM, or 256-QAM.

A symbol of a modulated ACK/NACK signal is mapped to a radio resource in a time domain and a frequency domain (step S130). A DL ACK channel can be linked to an index of a resource unit indicated by UL radio resource allocation information. That is, the symbol of the modulated ACK/NACK signal can be mapped to a resource unit linked to an index of a UL radio resource allocated to the MS. For example, if data allocated to the MS has resource unit indices N to M, an index of each resource unit can be linked to a DL ACK channel index. If a granularity of a resource is one PRU (or LRU) and a system bandwidth is 5MHz, 24 ACK channels are required.

In case of MU-MIMO, the same radio resource can be shared by MSs by paring. When the same resource unit is allocated to the MSs, different ACK channels can be indicated by using a UL pilot pattern, an orthogonal sequence index, etc. By assigning a scheduling granularity to two or more resource units, an increasing MU-MIMO data stream can be supported. When the MU-MIMO data stream is transmitted by using a 1/2 resource unit, a resource amount of a DL ACK channel can be determined as follows.
resource amount of DL ACK channel = (MU-MIMO data streams * 1/2 RU * k)/scheduling granularity

Herein, a transmission bandwidth may be 5MHz, and a multiplexing rate k may be 1.

At the bandwidth 5MHz, a minimum resource unit for the DL ACK channel may correspond to a 1/2 DRU. The resource unit may include 9 subcarriers and 6 OFDM symbols. Table 1 shows an example of the minimum resource unit of the ACK channel for the MU-MIMO data stream for each transmission bandwidth.

**[Table 1]**

| Tx BW | 5 MHz | 10 MHz | 20 MHz |
|---|---|---|---|
| 1 data stream | 1/2 DRU (LRU) | 1 DRU (LRU) | 2 DRU (LRU) |
| 2 data stream | 1 DRU (LRU) | 2 DRU (LRU) | 4 DRU (LRU) |
| 3 data stream | 1 1/2 DRU (LRU) | 3 DRU (LRU) | 6 DRU (LRU) |
| 4 data stream | 2 DRU (LRU) | 4 DRU (LRU) | 8 DRU (LRU) |

The ACK channel can be dynamically allocated. The number of ACK channels to be multiplexed can be regulated according to an amount of an ACK/NACK signal to be allocated to a DL data region, and thus can be allocated to a resource unit corresponding to a DL ACK channel. The number of ACK channels to be multiplexed can be reported through higher-layer signaling. In addition, the ACK channel can be allocated by considering power boosting. The method of 'RU based linkage of ACK/NACK' may not add ACK/NACK related feedback information to some channels of configured ACK channels when MSs that perform UL data transmission do not use all resource elements provided at a corresponding system bandwidth. Power of these channels may be add to channels in which ACK/NACK related feedback information is added in practice.

In order to decrease inter-cell interference, the ACK channel region can be shifted according to a cell ID in a subframe.

The DL ACK channel can be allocated by considering a frequency partition. The DL ACK channel can be allocated by being divided for each frequency partition. Alternatively, all DL ACK channels can be allocated to a specific frequency partition. For example, all DL ACK channels can be allocated to a region of a frequency reuse 3, a frequency reuse 2, or a frequency reuse 1. When all or some of the DL ACK channels are allocated to the specific frequency partition, this can be indicated by a BS by using control signaling or can be indicated implicitly between the BS and an MS. A size of the DL ACK channel can be identical or different from one frequency partition to another. A size of the DL ACK channel for each frequency partition can be allocated by the BS by using control signaling or can be indicted implicitly between the BS and the MS. The control signaling can be transmitted through a common control channel, a BCH, a P-BCH, an S-BCH, etc.

MIMO-based encoding can be performed on a symbol of an ACK/NACK signal mapped to a radio resource (step S 140).

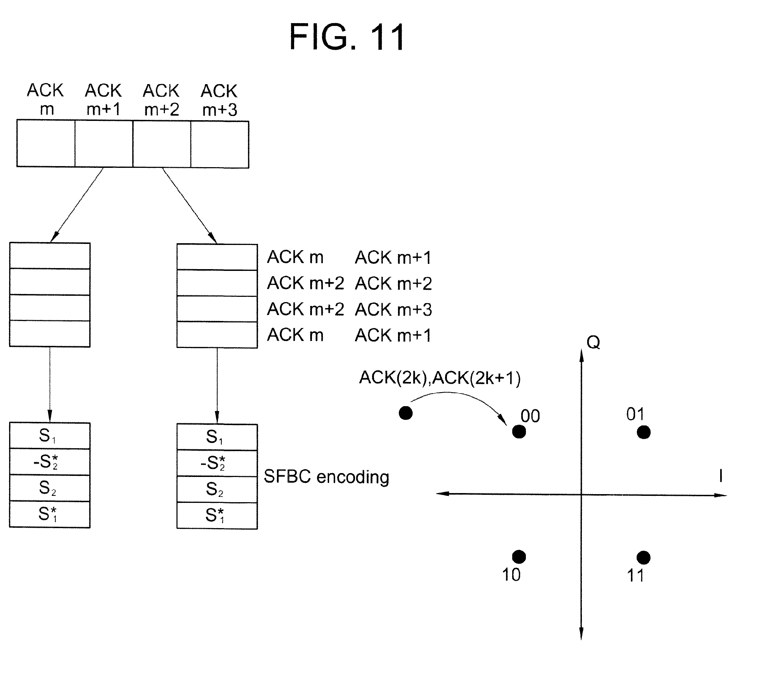

FIG. 11 shows encoding of an ACK channel according to an embodiment of the present invention.

Referring to FIG. 11, an ACK/NACK signal repeated on the basis of a repetition rate can be carried on different frequency tones in a DRU. When the ACK/NACK signal is carried on the different frequency tones in the DRU, a frequency diversity gain can be obtained. For example, when there are four ACK/NACK signals m to m+3, each ACK/NACK signal can be carried on the different frequency tones in the DRU by being repeated according to a repetition rate 2. SFBC encoding can be performed on the ACK/NACK signal carried on the DRU. SFBC is appropriate to obtain a spatial diversity gain. As two consecutive tones are paired in the DRU, the SFBC can obtain a sufficient diversity gain.

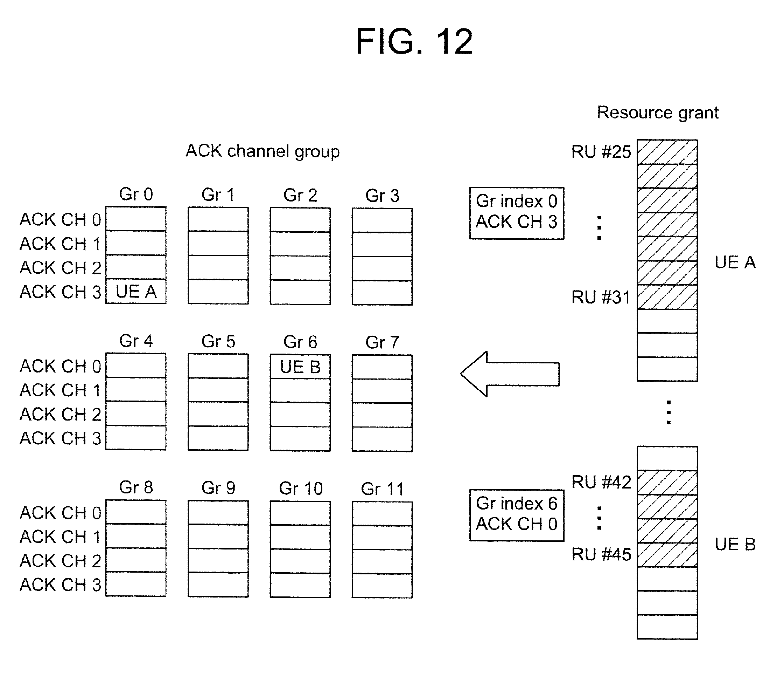

FIG. 12 shows grouping of ACK channels of multiple users according to an embodiment of the present invention.

Referring to FIG. 12, it is assumed that each of ACK channel groups, i.e., Gr 0 to Gr 11, consists of four ACK channels, i.e., ACK CH 0 to ACK CH 3. An ACK channel group and a component index of an ACK channel included in the ACK channel group are indicated on the basis of a first resource unit (RU).

If RUs #25 to #31 are allocated to a UE A, an ACK CH 3 of an ACK channel group index 0 is mapped to the UE A according to a method of mapping an ACK/NACK signal on the basis of a resource block. When RUs #42 to #45 are allocated to a UE B, an ACK CH 0 of an ACK channel group index 6 is mapped to the UE B.

An index of an ACK channel group, an index of a component index in the ACK channel group, and an actual ACK channel index can be expressed as follows.
(1) ACK channel group index = first resource unit index % the number of ACK channel groups
(2) component index = [floor (PRB index/the number of ACK channel group)] % the number of ACK channels
(3) ACK channel index = ACK channel group index + component index × the number of ACK channel groups

A resource block for mapping an ACK/NACK signal onto a DL ACK channel can be expressed as follows. (1) M × k/N , where M is the number of streams in virtual MIMO, k is the number of resource units, and N is a resource allocation granularity. The number of resource units, i.e., k, may be 48 in a 16m system considering a 10MHz transmission bandwidth and may be 24 when considering a 5MHz transmission bandwidth. (2) M × the total number of RUs/N

The DL ACK channel is mapped to a distributed allocation resource unit in order to obtain a frequency selective diversity. That is, the DL ACK channel is mapped to a subcarrier distributed in a frequency domain. Although resource mapping of the DL ACK channel is basically mapped to a DRU by using FDM, the DL ACK channel can also be mapped to a localized resource unit. When resource mapping of the DL ACK channel is configured using TDM, distribution can be made to n OFDM symbols in any permutation pattern in order to obtain a frequency diversity.

The DL ACK channel of the 16m system can be configured using either hybrid CDM/FDM in which small SFs are repeatedly distributed in the frequency domain or FDM for obtaining the frequency diversity. According to resource allocation of the 16m system, a configuration of a resource unit, various cyclic prefix (CP) sizes, a multicast and broadcast service (MBS) type, a multi-carrier, etc., the ACK channel can be designed by using the method proposed in the present invention.

Target required quality of the DL ACK channel implies a NACK error for an ACK signal and an ACK error for a NACK signal. Although the target required quality can be based on 1e⁻⁴, it can also be replaced with any target required quality required in a system.

In the hybrid CDM/FDM, a maximum multiplexing rate that satisfies corresponding required target quality is found by increasing multiplexing capability. When considering mapping to a DRU, a permutation rule applied to the DRU may be used, or pairing in a two-tone unit for space frequency block code (SFBC), a permutation in a one-tone unit, and clustering in a multi-tone unit can be considered as a transmission diversity method for a current 16m system. Each paring has an effect on a size (e.g., a spreading factor) of an orthogonal sequence.

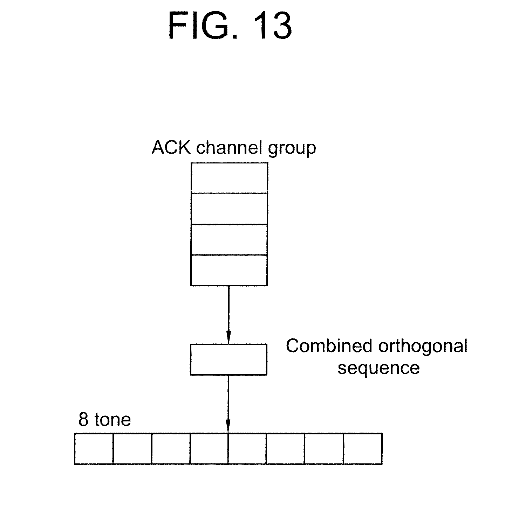

FIG. 13 shows orthogonal sequence combination of an ACK channel group according to an embodiment of the present invention.

Referring to FIG. 13, respective ACK channel groups are combined by using an orthogonal sequence. ACK channels for a plurality of users can be multiplexed by being combined using the orthogonal sequence. There is no restriction on a type of the orthogonal sequence. Each ACK channel group can be generated with 8 tones by using the orthogonal sequence. The 8 tones to which the ACK channel group is allocated can be allocated to a DRU. Although each ACK channel group is generated with the 8 tones by using the orthogonal sequence, a sequence length can be determined differently according to multiplexing capability, and the number of tones generated may change.

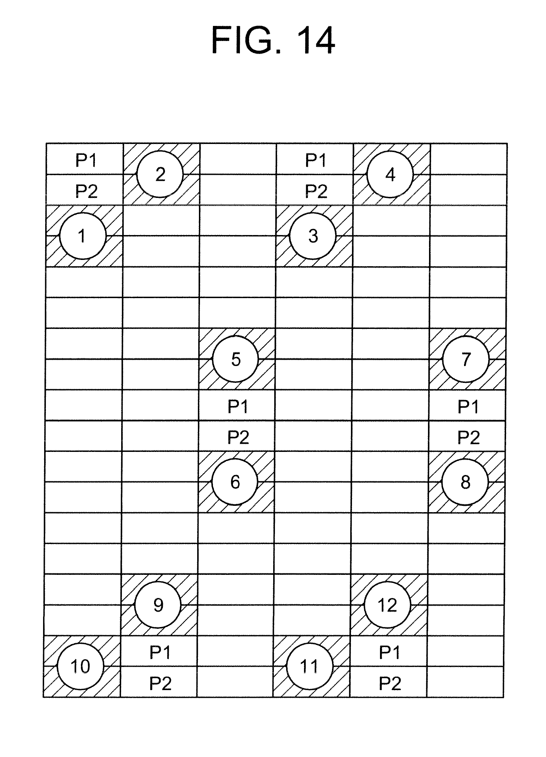

FIG. 14 shows an ACK channel allocated to a DRU according to an embodiment of the present invention.

Referring to FIG. 14, each ACK channel group can be combined using an orthogonal sequence and can be allocated to a DRU (or an LRU) by using 8 tones. Each of the 8 tones generated for each ACK channel group can be divided into a repetition unit of 4 and thus can be arranged near pilots constituting the DRU. Other three ACK channel groups are allocated such that all ACK channel groups have the same reliability. Herein, the arrangement of the pilots is for exemplary purposes only, and thus various pilot patterns can be used. If a radio resource for the ACK channel is insufficient, some of the pilots can be punctured so that they can be used as the ACK channel.

According to the proposed method, a spreading factor SF=2, I/Q channel multiplexing, BPSK modulation scheme, and a repetition rate 4 are applied when using multiplexing capability 4. The same result can be obtained even if a QPSK modulation scheme, a spreading factor SF=2, and a repetition rate 4 are applied. There is no restriction on multiplexing capability of an ACK channel, and ACK channel parameters can change variously according to the determined multiplexing capability.

The ACK channel can be dynamically allocated. The number of ACK channels to be multiplexed can be regulated according to an amount of an ACK/NACK signal to be allocated to a DL data region, and thus can be allocated to a resource unit corresponding to a DL ACK channel. In order for the ACK channel to be configured more robust to a channel state, a repetition rate can be increased by regulating a granularity of a radio resource for the ACK channel, and accordingly, channel quality of the ACK channel can be improved.

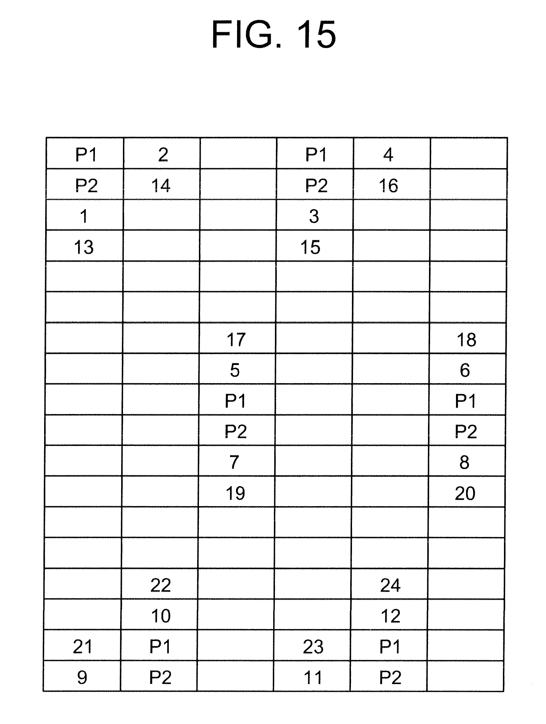

FIG. 15 shows an ACK channel allocated to a DRU according to another embodiment of the present invention.

Referring to FIG. 15, when K ACK channels are multiplexed using FDM, a modulation order and a repetition number are expressed as follows. The modulation order is a value obtained by dividing the total number of bits of ACK/NACK signals by a multiplexing rate K.
modulation order = the number of ACK channels per tone = (the total number of ACK channels)/K tones
repetition number = (the number of subcarriers - the number of pilot subcarriers)/(the total number of ACK channels/K)

For example, when two ACK channels are multiplexed (i.e., the multiplexing rate K=2), 48 ACK/NACK signals can be multiplexed to 24 ACK/NACK signals by using QPSK modulation. The repetition number is 4 as a result of calculation of 96 tones (i.e., the total number of subcarriers (108) - the number of pilot subcarriers (12))/24.

In hybrid CDM/FDM, similarly to the DL ACK channel configuration, the ACK channel can be allocated to an LRU from a time domain to a frequency domain or from the frequency domain to the time domain, in that order. In addition, the ACK channel can be arranged such that it is arranged adjacent to a pilot, starting from a first part of the ACK channel in a unit of a repetition rate obtained by using the proposed method of calculating the repetition rate. The remaining parts of the ACK channel can be arranged to a DRU or a resource unit so that channel estimation is performed on each DL ACK channel with an average reliability.

Two ACK/NACK signals can be configured into 8 bits through 4 repetitions, then be modulated using QPSK modulation, and then be allocated to an ACK channel of the DRU, thereby being arranged as shown in the figure. The two ACK/NACK signals are multiplexed across 4 tones, and 24 multiplexed ACK channels are generated in total. That is, 4 units of 24 multiplexed ACK channels constitute one ACK channel group and are preferentially arranged near a pilot. The remaining 3 ACK channel groups are allocated such that a channel state resulted from channel estimation is constant. Such an arrangement of the ACK channel is for exemplary purposes only, and thus the ACK channel can be arranged by being distributed variously according to a permutation rule of a DRU structure of the 16m system.

The ACK channel can be dynamically allocated. In order for the ACK channel to be configured more robust to a channel state, a repetition rate can be increased by regulating a granularity of a radio resource for the ACK channel, and accordingly, channel quality of the ACK channel can be improved.

### <Structure of DL ACK channel>

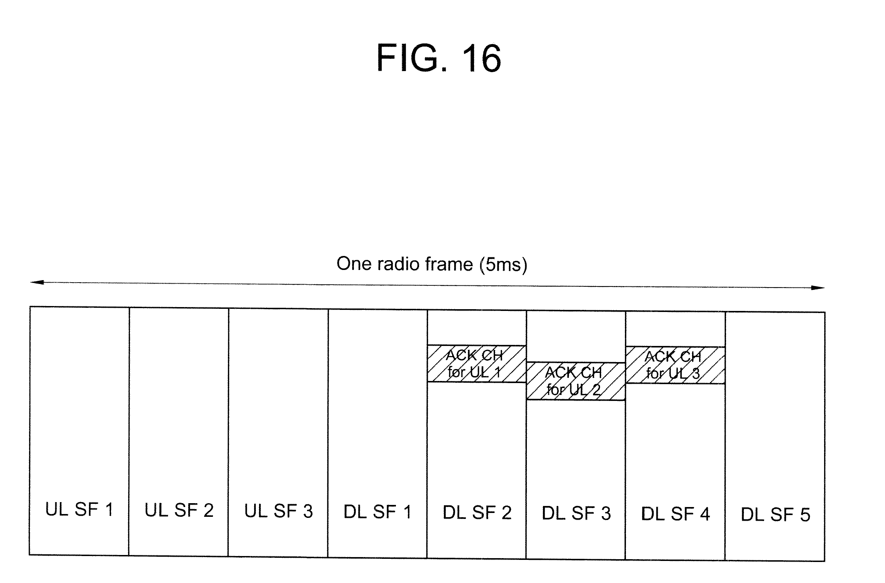

FIG. 16 shows a structure of a DL ACK channel according to an embodiment of the present invention.

Referring to FIG. 16, a TDD-type frame in which a DL subframe and a UL subframe are arranged at different times is assumed. A DL ACK/NACK signal for data transmitted through the UL subframe is transmitted after a predetermined delay time. That is, the DL ACK channel is arranged in the DL subframe after the predetermined delay time in the UL subframe. The ACK channel can occupy a part of a frequency band in the DL subframe. Alternatively, the ACK channel can occupy some OFDM symbols and all or some parts of the frequency band in the DL subframe.

A location of the DL ACK channel can be implicitly indicated in a resource unit having a smallest logical index in each subframe, and the DL ACK channel can be allocated to the resource unit to be indicated. The location of the DL ACK channel can be indicated in a first PRU in each subframe, and the DL ACK channel can be allocated to the resource unit to be indicated. The location of the DL ACK channel can be indicated in a first LRU for each frequency partition, and the DL ACK channel can be allocated to the resource unit to be indicated. The location of the DL ACK channel can be indicated implicitly or can be indicated explicitly through control signaling. In this case, the control signaling can be transmitted through a common control channel, a P-BCH, an S-BCH, a BCH, etc.

In the method of 'RU-based linkage of ACK/NACK', an ACK/NACK signal corresponding to one or some or all of resource units among resource units allocated to an MS can be mapped to an input value of discrete Fourier transform (DFT). A DFT size is a multiple ofN (where N is a multiple of 2 greater than 0). For example, N may be 48 by considering a size of the ACK channel.

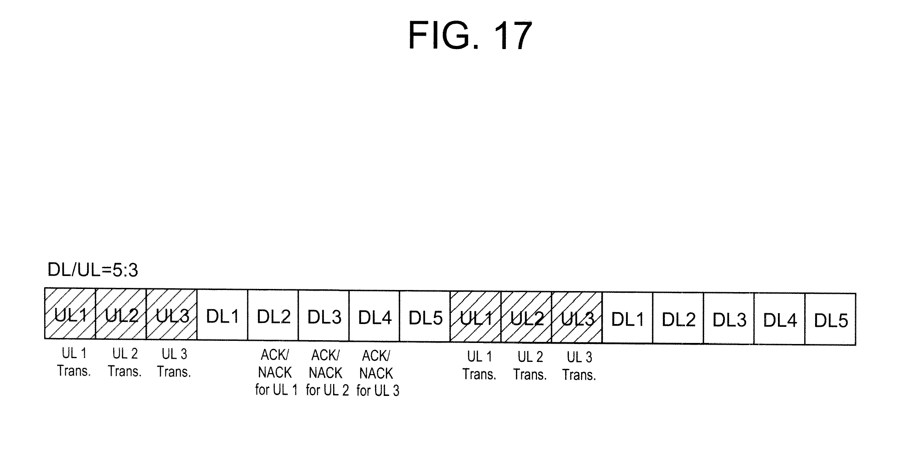

FIG. 17 shows a structure of a DL ACK channel according to another embodiment of the present invention.

Referring to FIG. 17, a TDD-type frame in which a ratio of a DL subframe to a UL subframe is DL:UL = 5:3 is shown. Assume that a delay time of a DL ACK/NACK signal for data through the UL subframe is defined as 4 subframes. An ACK/NACK signal for data transmission through a subframe UL 1 is transmitted through a subframe DL 2, an ACK/NACK signal for data transmission through a subframe UL 2 is transmitted through a subframe DL 3, and an ACK/NACK signal for data transmission through a subframe UL 3 is transmitted through a subframe DL 4.

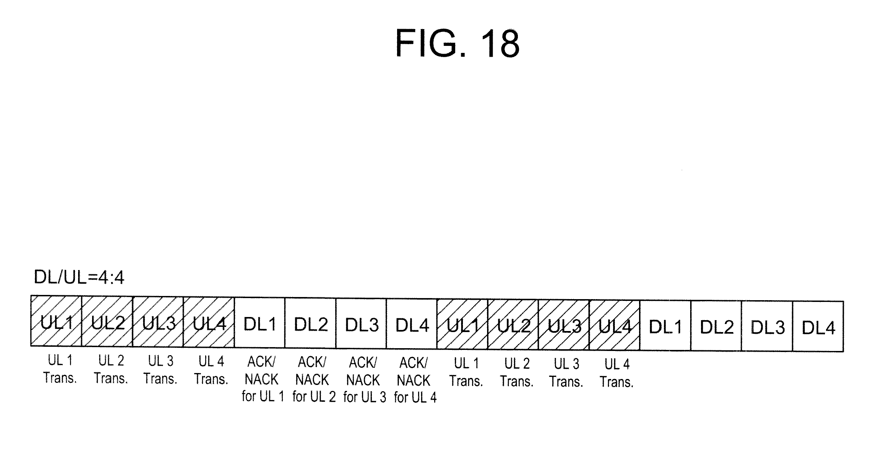

FIG. 18 shows a structure of a DL ACK channel according to another embodiment of the present invention.

Referring to FIG. 18, a TDD-type frame in which a ratio of a DL subframe and a UL subframe is DL:UL = 4:4 is shown. Assume that a delay time of a DL ACK/NACK signal for data through the UL subframe is defined as 4 subframes. An ACK/NACK signal for data transmission through a subframe UL 1 is transmitted through a subframe DL 1, an ACK/NACK signal for data transmission through a subframe UL 2 is transmitted through a subframe DL 2, an ACK/NACK signal for data transmission through a subframe UL 3 is transmitted through a subframe DL 3, and an ACK/NACK signal for data transmission through a subframe UL 4 is transmitted through a subframe DL 4.

In the aforementioned TDD-type frame, the ratio of the DL subframe to the UL subframe can be determined variously such as 7:1, 6:2, 5:3, 4:4, 3:5, 2:6, 1:7, etc. The ACK channel can be arranged by considering an ACK/NACK signal's delay time predetermined in a frame with various structures. The predetermined ACK/NACK signal's delay time may be a time pre-known to a BS and an MS. Alternatively, the ACK/NACK signal's delay time may be reported by the BS to the MS.

Table 2 shows an example of an ACK/NACK signal's delay value according to a configuration of a UL frame and a DL frame.

**[Table 2]**

| UL/DL Configuration | subframe M | | | | | | | |
|---|---|---|---|---|---|---|---|---|
| | 0 | 1 | 2 | 3 | 4 | 5 | 6 | 7 |
| 4:4 | 4 | 4 | 4 | 4 | | | | |
| 3:5 | 4 | 4 | 4 | | | | | |
| 2:6 | 4 | 4 | | | | | | |

Table 3 shows another example of the ACK/NACK signal's delay value according to the configuration of the UL frame and the DL frame.

**[Table 3]**

| UL/DL Configuration | subframe M | | | | | | | |
|---|---|---|---|---|---|---|---|---|
| | 0 | 1 | 2 | 3 | 4 | 5 | 6 | 7 |
| 4:4 | 4 | 4 | 4 | 4 | | | | |
| 3:5 | 3 | 3 | 3 | | | | | |
| 2:6 | 2 | 2 | | | | | | |

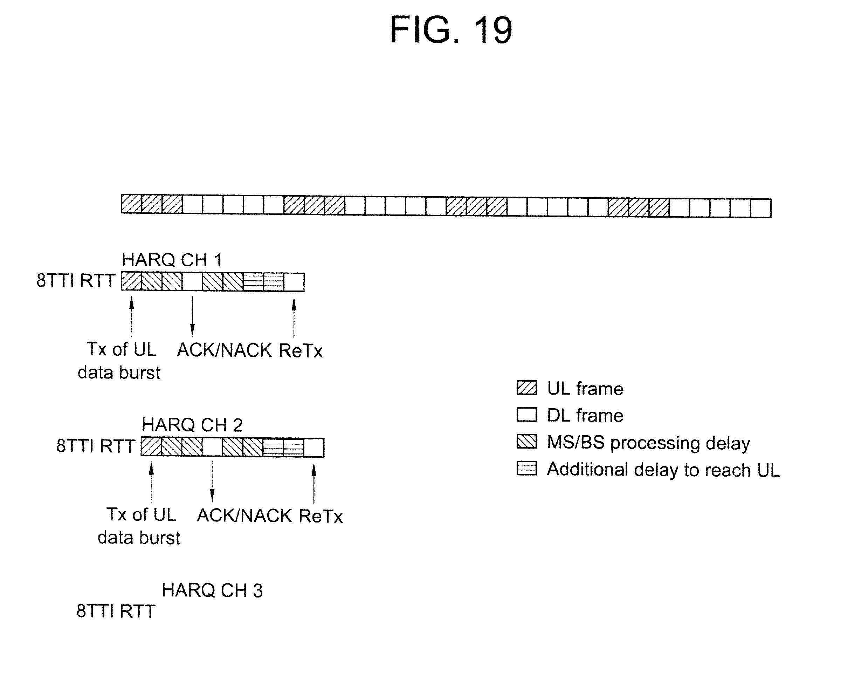

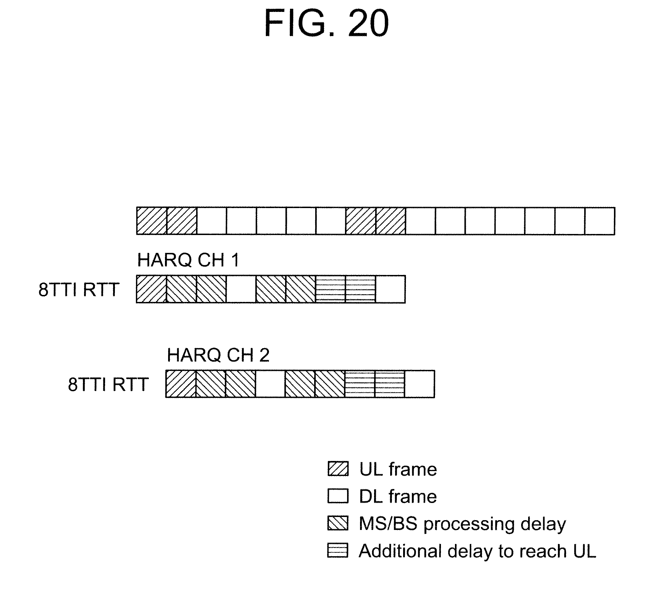

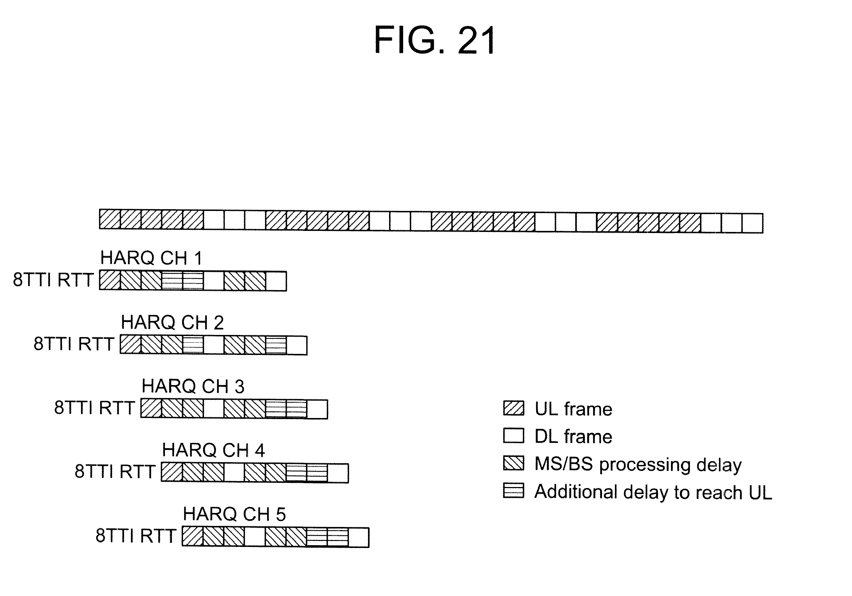

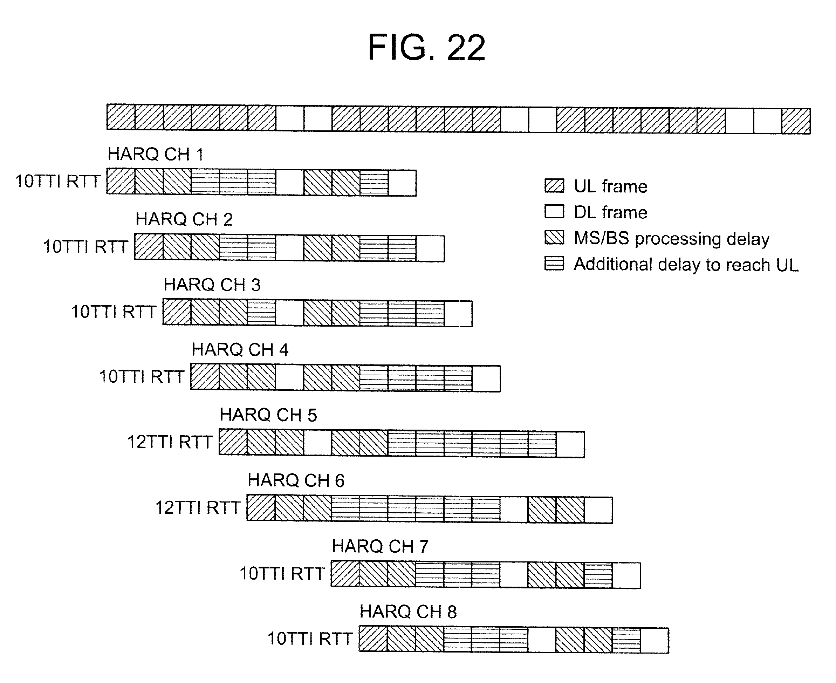

FIG. 19 shows a structure of a DL ACK channel according to another embodiment of the present invention. FIG. 20 shows a structure of a DL ACK channel according to another embodiment of the present invention. FIG. 21 shows a structure of a DL ACK channel according to another embodiment of the present invention. FIG. 22 shows a structure of a DL ACK channel according to another embodiment of the present invention.

Referring to FIG. 19 to FIG. 22, a frame of FIG. 19 is a TDD-type frame in which a ratio of a DL subframe to a UL subframe is DL:UL = 5:3. A frame of FIG. 20 is a TDD-type frame in which the ratio of the DL subframe to the UL subframe is DL:UL = 6:2. A frame of FIG. 21 is a TDD-type frame in which the ratio of the DL subframe to the UL subframe is DL:UL = 3:5. A frame of FIG. 22 is a TDD-type frame in which the ratio of the DL subframe to the UL subframe is DL:UL = 2:6.

As the ratio of the DL subframe to the UL subframe is determined variously in the TDD-type frame, an ACK channel can be arranged by considering a delay time of an ACK/NACK signal as illustrated in the figure. The delay time of the ACK/NACK signal may be a time pre-known to a BS and an MS, or may be reported by the BS to the MS.

Table 4 shows an example of the number of HARQ channels according to the configuration of the DL frame and the UL frame.

**[Table 4]**

| DL:UL ratio | 3:5 | 4:4 | 5:3 | 6:2 | 2:6 |
|---|---|---|---|---|---|
| HARQ process | 5 | 4 | 3 | 2 | 8 |

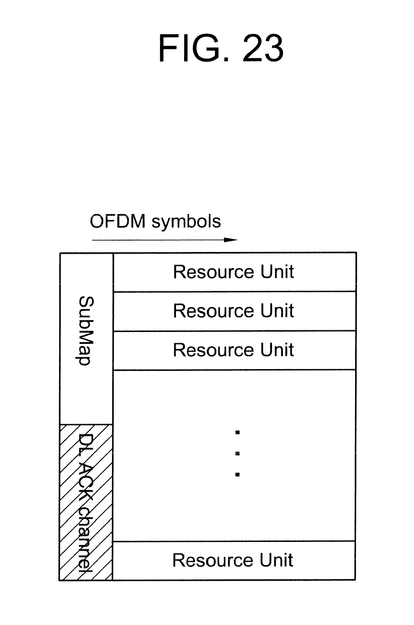

FIG. 23 shows a structure of a DL ACK channel according to another embodiment of the present invention. This is a case where the DL ACK channel is arranged along a frequency domain.

Referring to FIG. 23, the DL ACK channel can be arranged in a subframe preferentially along the frequency domain. A sub-MAP can be allocated in a first OFDM symbol of the subframe. The sub-MAP includes configuration information or allocation information or the like of a resource unit included in the subframe. The sub-MAP can occupy a part or the entirety of a frequency band in the frequency domain. The DL ACK channel can be arranged subsequently to the sub-MAP in the frequency domain.

The sub-MAP may include ACK channel's allocation information included in the subframe. An MS can correctly receive its ACK/NACK signal only when the MS obtains information on a region allocated to the MS and the number of MSs by using the DL ACK channel. If there is no allocation information of the ACK channel, the MS may have a difficulty in finding the region of the ACK channel allocated to the MS. For this, allocation information of the ACK channel is included in the sub-MAP. Preferably, a region of the sub-MAP and the region of the ACK channel do not overlap with each other.

In order to reduce signaling overhead caused by the allocation information of the ACK channel, the ACK channel may be mapped implicitly to a location known to both a BS and the MS. In an operation of HARQ, information on the ACK channel may be transmitted using a radio resource allocation message, or only a NACK signal may be transmitted without transmission of an ACK signal. Additional signaling for indicating the ACK channel allocated to the MS may be required in the radio resource allocation message.

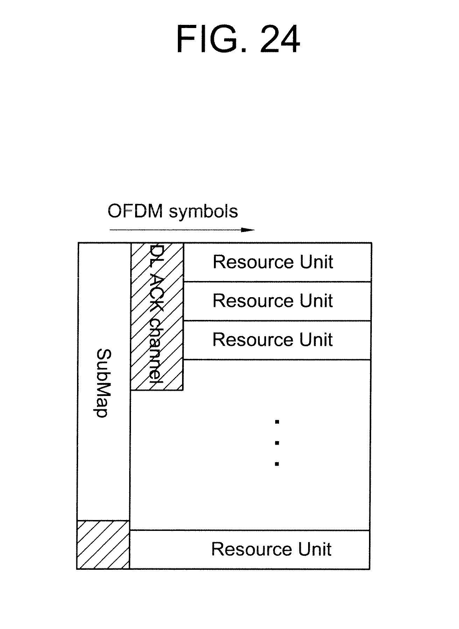

FIG. 24 shows a structure of a DL ACK channel according to another embodiment of the present invention. This is a case where the DL ACK channel is arranged in a frequency domain.

Referring to FIG. 24, the DL ACK channel can be arranged subsequently to a sub-MAP preferentially along the frequency domain. The sub-MAP includes information on a resource unit included in the subframe and information on the ACK channel.

When the DL ACK channel is arranged in the frequency domain, there is an advantage as follows: (1) it becomes robust to mobility of an MS; (2) a frequency diversity gain can be obtained; and (3) a compatibility probability with respect to a 3GPP LTE system increases. However, there is also a disadvantage in that: (1) additional signaling overhead for indicating an ACK channel region is generated; and (2) a size of the resource unit changes and thus allocation of the resource unit becomes difficult.

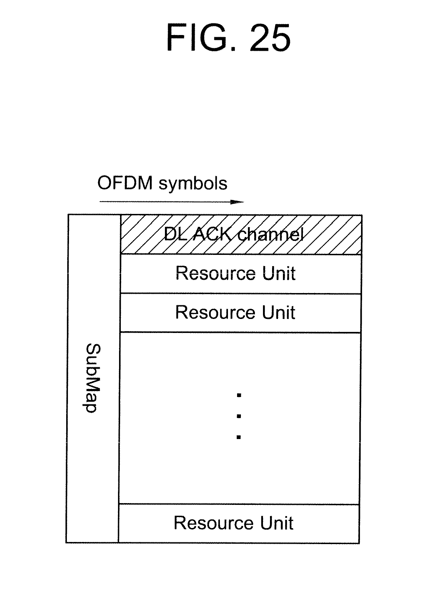

FIG. 25 shows a structure of a DL ACK channel according to another embodiment of the present invention. This is a case where the DL ACK channel is arranged in a time domain.

Referring to FIG. 25, the DL ACK channel of a subframe may include at least one resource unit. That is, the DL ACK channel may be allocated to at least one resource unit. A sub-MAP may be included in the subframe. Location information of a DL ACK channel region may be included in the sub-MAP. The DL ACK channel may be allocated to any resource unit. Alternatively, the DL ACK channel may be allocated to a predetermined resource unit, and in this case, a location of the DL ACK channel region may be indicated by using the sub-MAP.

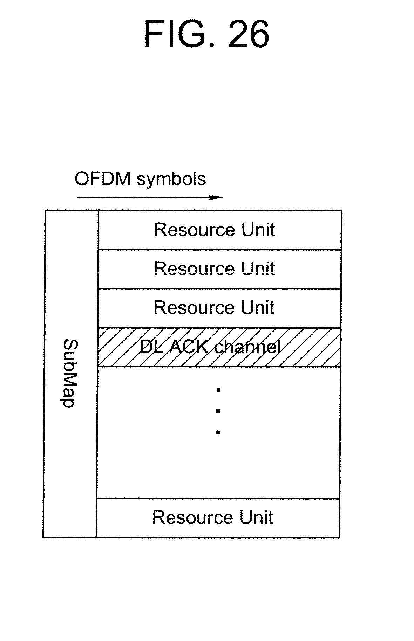

FIG. 26 shows a structure of a DL ACK channel according to another embodiment of the present invention. This is a case where the DL ACK channel is arranged in a time domain.

Referring to FIG. 26, the DL ACK channel is allocated to a resource unit in a middle part of a subframe.

When the DL ACK channel is allocated to at least one resource unit, there is an advantage in that: (1) a location of the ACK channel region can be implicitly indicated; (2) a data region and a control region can be configured separately; (3) the ACK channel can be allocated to a resource unit having a high reliability; and (4) a size of the resource unit can be maintained consistently. However, there is also a disadvantage in that: (1) an arrangement gain of the ACK channel considering an MS processing delay cannot be obtained; and (2) it is limited to a specific permutation rule.

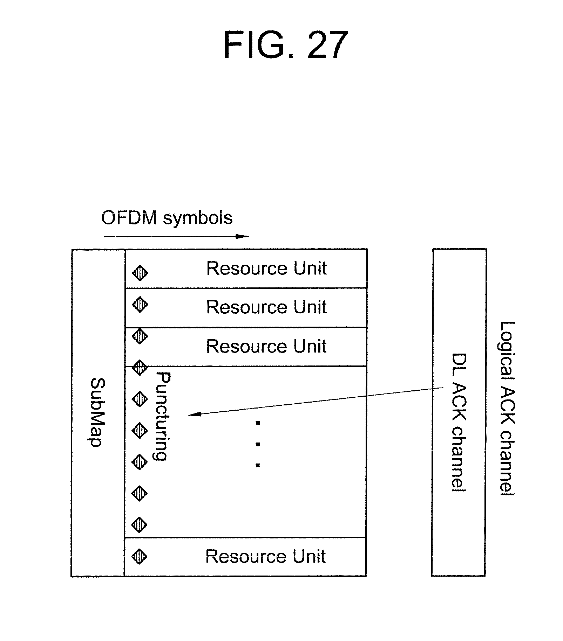

FIG. 27 shows a structure of a DL ACK channel according to another embodiment of the present invention. This is a case where a resource unit is punctured to be used as the ACK channel.

Referring to FIG. 27, a part of a tone included in a resource unit of a subframe can be punctured, and a logical DL ACK channel can be mapped to the punctured tone. The punctured tone is used as a physical DL ACK channel. Tones can be punctured on one OFDM symbol. By configuring the logical DL ACK channel, a component index of the ACK channel is mapped to a punctured tone on one OFDM symbol.

When a tone of a resource unit is punctured on one OFDM symbol and is then used as the DL ACK channel, it is possible to compensate for a disadvantage in which the DL ACK channel is arranged in a frequency domain as shown in FIG. 23 or FIG. 24. A frequency selective diversity gain can be obtained, and a size of the resource unit can be maintained consistently.

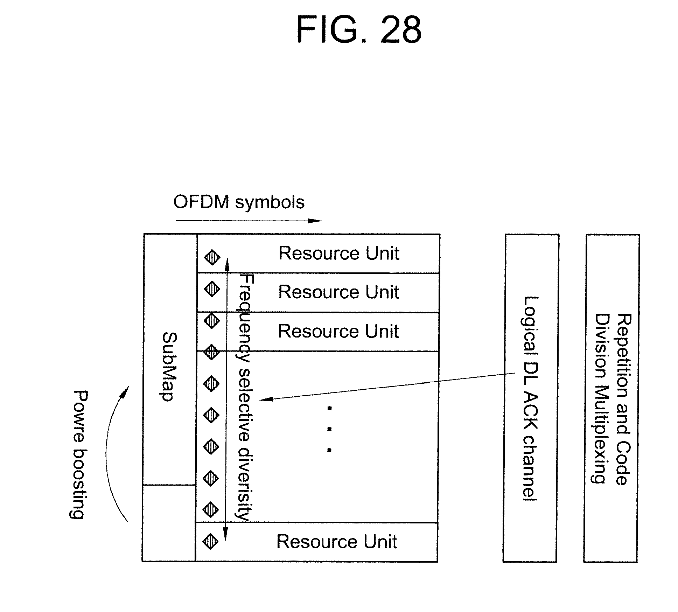

FIG. 28 shows a structure of a DL ACK channel according to another embodiment of the present invention. This is a case where a resource unit is punctured and is used as the ACK channel.

Referring to FIG. 28, when a tone of a resource unit is punctured on one OFDM symbol and is then used as the DL ACK channel, a more reliable ACK channel can be configured through repetition of an ACK/NACK signal. CDM can be used to improve capability of an ACK channel resource. That is, a plurality of ACK/NACK signals can be identified with an orthogonal sequence and then can be mapped to a physical ACK channel. Power boosting can be performed on a scalable sub-MAP. More robustness can be provided for a fast time selective channel.

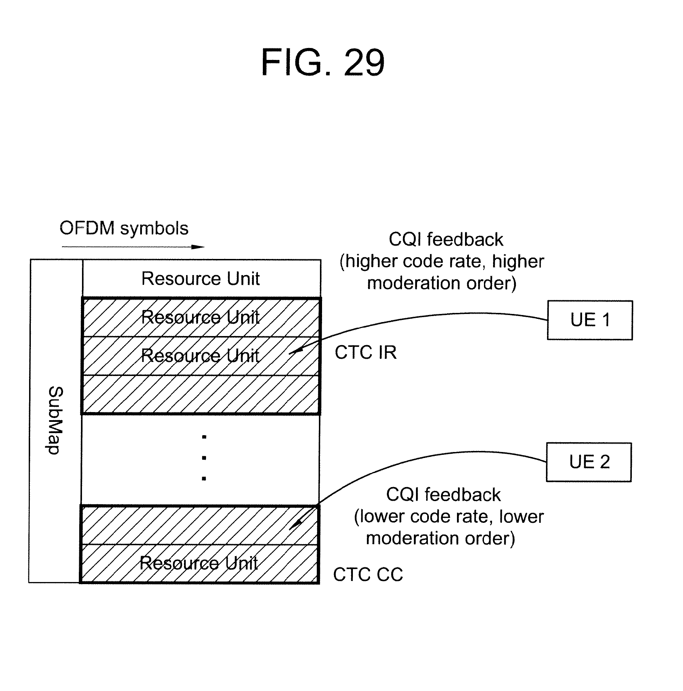

FIG. 29 shows resource allocation for an HARQ mode based on CQI feedback according to an embodiment of the present invention.

Referring to FIG. 29, a UE can measure a DL channel state by receiving a DL reference signal or pilot. The UE feeds back a CQI indicating the measured channel state to a BS. The BS can recognize the channel state by using the CQI. According to the channel state, a code rate, a modulation order, etc., are determined. Resource allocation for the HARQ mode may differ depending on the code rate, the modulation order, and a frame size. That is, the BS can determine resource allocation for the HARQ mode on the basis of the feedback CQI.

When a UE 1 feeds back a CQI indicating a good channel state, a higher code rate and a higher modulation order are selected. An HARQ scheme of an IR mode which is more advantageous for the higher code rate and the higher modulation order is used. In the HARQ scheme of the IR mode, a subpacket ID (SPID) is modified in a data retransmission process. HARQ of an enforced IR mode can be supported. Whether the channel state indicated by the CQI is good or bad can be determined on the basis of a predetermined CQI level. A reference CQI level can be determined variously according to a system.

When a UE 2 feeds back a CQI indicating a bad channel state, a lower code rate and a lower modulation order are selected. An HARQ scheme of a CC mode which is more advantageous for the lower code rate and the lower modulation order is used. In the HARQ scheme of the CC mode, an SPID is fixed in a data retransmission process. HARQ of an enforced CC mode can be supported.

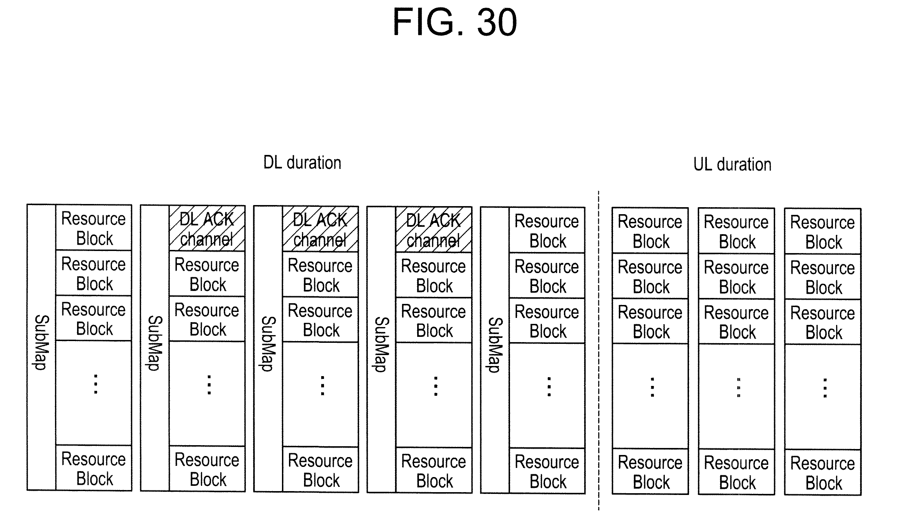

FIG. 30 shows a structure of a DL ACK channel according to another embodiment of the present invention.

Referring to FIG. 30, it is assumed that a frame includes 5 DL subframes and 3 UL subframes. A sub-MAP can be allocated to each DL subframe. Each subframe can include a plurality of resource blocks. The resource block implies a minimum resource allocation unit. The resource block can correspond to a resource unit. An ACK channel can be allocated to any resource block of the DL subframe. The ACK channel can be allocated in every DL subframe or may be allocated in some DL subframes.

When the DL ACK channel is allocated to a physical resource block, information on a location of a resource block mapped to the DL ACK channel, a location and size of the DL ACK channel in the resource block, a parameter for indentifying a multiplexed ACK channel is required. As a method of effectively reporting mapping information of the ACK channel, there is a compression method.

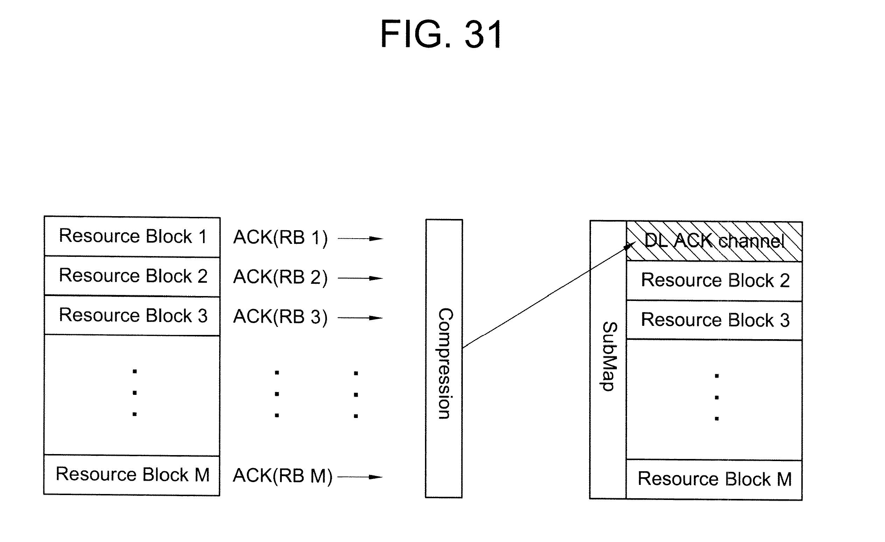

FIG. 31 shows a method of allocating a DL ACK channel according to an embodiment of the present invention.

Referring to FIG. 31, a compression method is a method of representing an ACK/NACK signal by decreasing the ACK/NACK signal for each of a plurality of resource blocks included in a UL subframe. The ACK/NACK signal for each of the plurality of resource blocks can be compressed by distinguishing persistent scheduling and dynamic scheduling. A CQI fed back from a UE can be considered when compressing the ACK/NACK signal.

An ACK channel for each of the plurality of resource blocks of a UL subframe is mapped to that DL ACK channel that occupies at least one resource block in a DL subframe according to the compression method.

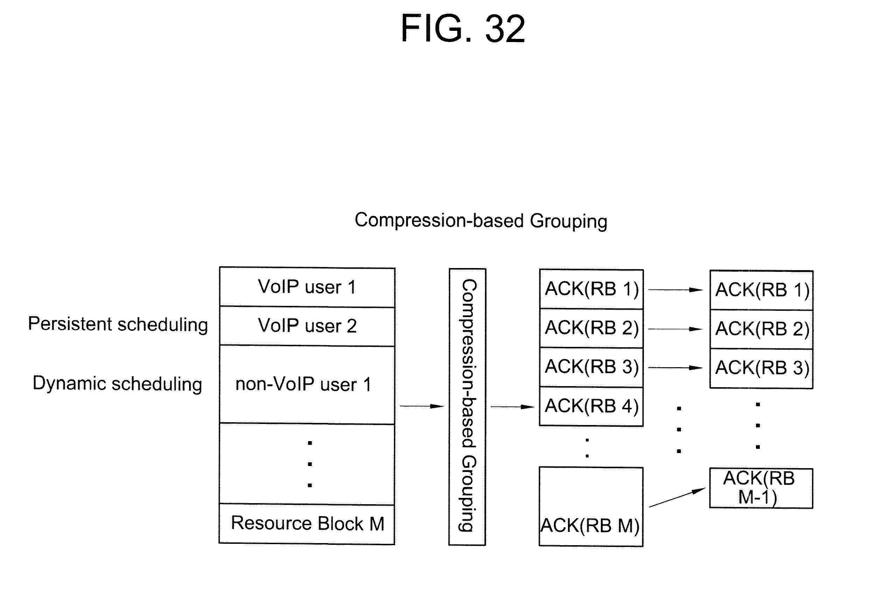

FIG. 32 shows a compression method for an ACK channel according to an embodiment of the present invention.

Referring to FIG. 32, a scheduling type of a radio resource includes persistent scheduling and dynamic scheduling. The persistent scheduling is a method in which a determined resource region is persistently allocated to one user during a specific time. The dynamic scheduling is a method in which a resource region is dynamically allocated to a plurality of users by using control information. In general, the persistent scheduling is performed for a user using a voice over Internet protocol (VoIP) service, and the dynamic scheduling is performed for a user not using the VoIP service. In one subframe, a radio resource can be allocated to the user using the VoIP service and the user not using the VoIP service. That is, the persistent scheduling and the dynamic scheduling can be performed in one subframe.

Compression-based grouping is performed by distinguishing a resource block on which the persistent scheduling is performed and a resource block on which the dynamic scheduling is performed. An ACK channel group for the resource block on which the persistent scheduling is performed and an ACK channel group for the resource block on which the dynamic scheduling is performed can be distinguished.

According to the persistent scheduling, one or more resource blocks can always be allocated temporally to a VoIP user and one ACK channel can be allocated to one or more resource blocks, and thus overhead caused by an ACK/NACK signal can be decreased. That is, an ACK/NACK signal for some subframes or all subframes can be omitted for a VoIP service performed using a plurality of subframes, and thus overhead caused by the ACK/NACK signal can be decreased.

In the dynamic scheduling, a plurality of resource blocks can be allocated to a non-VoIP user in one subframe. As to the plurality of resource blocks allocated to the non-VoIP user, only an ACK/NACK signal for a first resource block can be transmitted, and the ACK/NACK signal for the first resource block can implicitly indicate whether it is ACK/NACK for the remaining resource blocks. Alternatively, the ACK channel can be compressed by determining a size of a resource block used in the dynamic scheduling to be different from a size of a resource block used in the persistent scheduling. For example, resource block used in the persistent scheduling may include 12 subcarriers in a frequency domain, and resource blocks used in the dynamic scheduling may include 24 subcarriers in the frequency domain. Since one ACK channel is allocated to one resource block, the number of ACK channels is decreased by an increment of a size of the resource block. According to a granularity of the resource block, the ACK channel can be compressed with a high rate. However, in terms of scheduling, there may be restriction in regulating the granularity of the resource block.

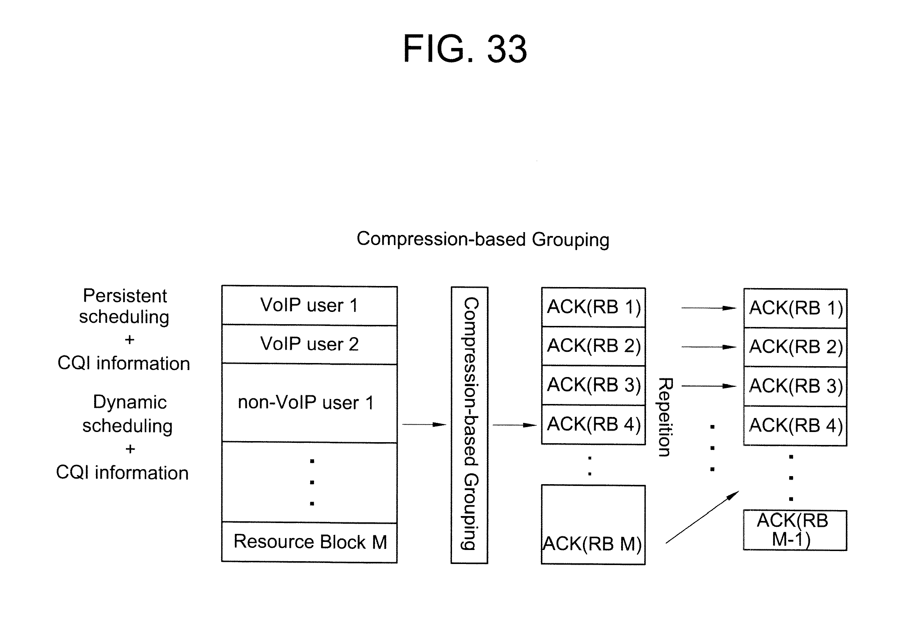

FIG. 33 shows a compression method for an ACK channel according to another embodiment of the present invention.

Referring to FIG. 33, when compression-based grouping is performed on an ACK channel by distinguishing persistent scheduling and dynamic scheduling, a repetition rate of an ACK/NACK signal for a user to which two or more resource blocks are allocated can be determined by considering a CQI fed back from a UE. When the CQI fed back from the UE indicates a poor channel state, the ACK/NACK signal can be repetitively mapped for reliability of the ACK channel. For example, if a CQI of a non-VoIP user to which two resource blocks are allocated is less than a determined threshold, the ACK/NACK signal can be repetitively transmitted by allocating two ACK channels for the reliability of the ACK channel.

The compression-based grouping considering the CQI can be effective when a resource allocation unit is predetermined. However, in terms of scheduling, there may be restriction in regulating a granularity which is a resource allocation unit.

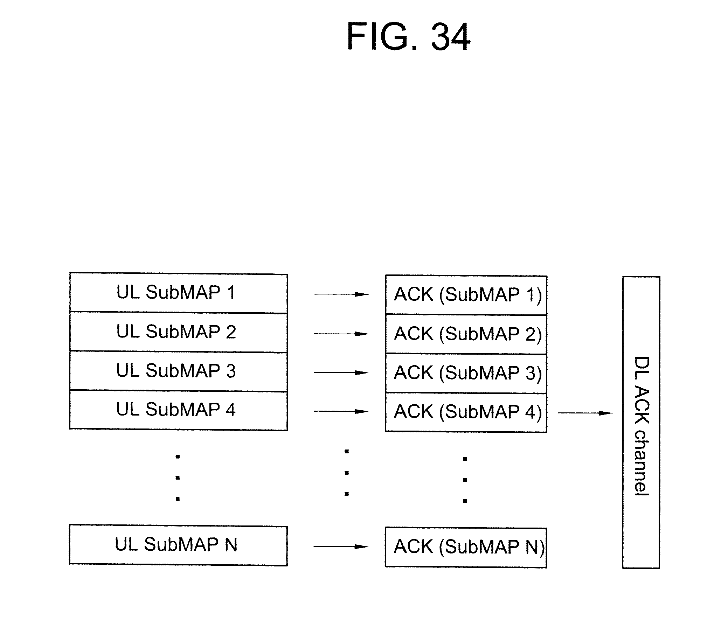

FIG. 34 shows mapping of an ACK channel using control information according to an embodiment of the present invention.

Referring to FIG. 34, a UL sub-MAP includes size and location information of a radio resource allocated to a UE in a UL subframe or a DL subframe. By using the size and location information of the radio resource allocated to the UE, an ACK/NACK signal can be linked to each DL sub-MAP. That is, an ACK/NACK signal for a corresponding UE can be transmitted using a DL sub-MAP allocated to each UE. The ACK/NACK signal linked to each UL sub-MAP is mapped to a DL ACK channel. Since a configuration of the DL ACK channel is transmitted using a UL sub-MAP for each UE, overhead caused by ACK/NACK signal transmission can be decreased and an additional compression method may not be used.
However, in case of a VoIP user not requiring control information on a radio resource by applying persistent scheduling, a method of transmitting the ACK/NACK signal by using the control information cannot be applied, and in case of a system not using the sub-MAP, a method of transmitting the ACK/NACK signal by using the control information cannot be applied.

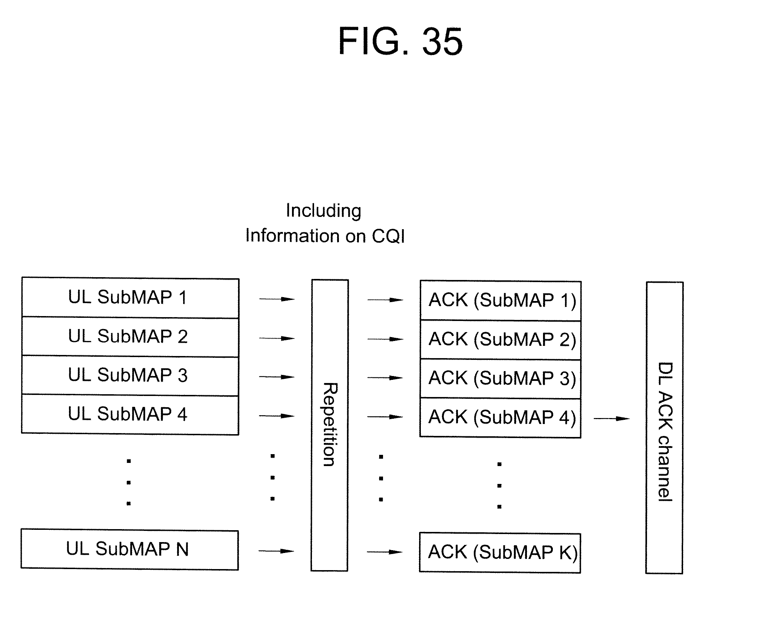

FIG. 35 shows mapping of an ACK channel using control information according to another embodiment of the present invention.

Referring to FIG. 35, when using the method of transmitting the ACK/NACK signal by the use of the control information, an ACK channel can be configured by repeating the ACK/NACK signal by applying a CQI fed back from a UE. When a channel state is bad, reliability of the ACK channel can be ensured by repetitively mapping the ACK/NACK signal to the ACK channel.

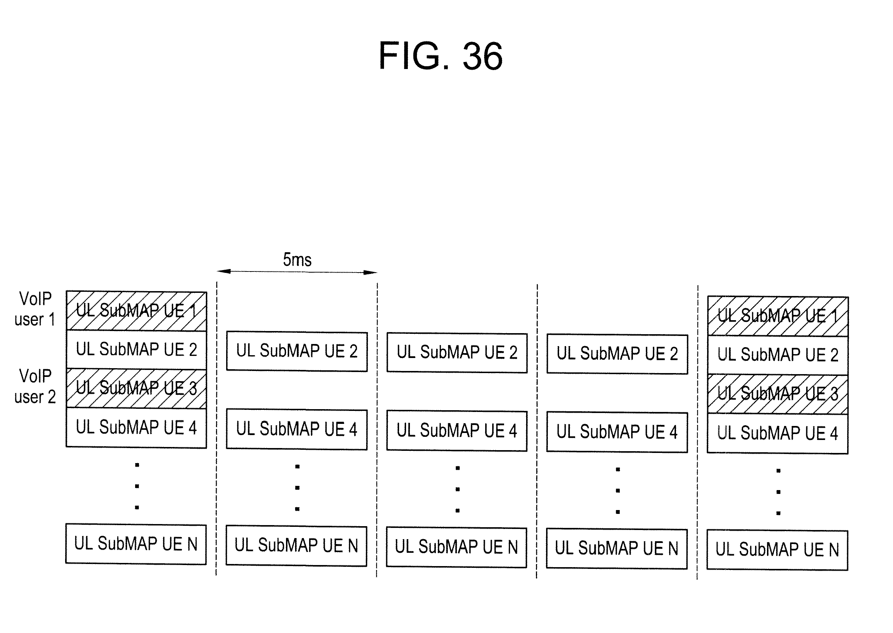

FIG. 36 shows sub-MAP transmission according to an embodiment of the present invention.

Referring to FIG. 36, a UL sub-MAP for a non-VoIP user to which dynamic scheduling is applied is transmitted in every frame in a superframe, whereas a UL sub-MAP for a VoIP user to which persistent scheduling is applied can be transmitted using only one frame in the superframe. For example, when four 5ms-frames are included in a 20ms-superframe, the UL sub-MAP for the VoIP user can be transmitted only through a first frame, and the UL sub-MAP for the non-VoIP user can be transmitted in every 5ms-frame. A plurality of subframes are included in the frame, and the UL sub-MAP can be included in either in any subframe or all subframes in the frame.

Since persistent scheduling is applied to the VoIP user, a non-adaptive HARQ scheme or a synchronous HARQ scheme not requiring additional control information for HARQ can be applied. In addition, control information on UL data is not required in the persistent scheduling. Therefore, there is a difficulty in applying a method of transmitting an ACK/NACK signal by using the UL sub-MAP. As to a user to which dynamic scheduling is applied, the method of transmitting the ACK/NACK signal by using the UL sub-MAP can be applied. As to a user to which persistent scheduling is applied, a method of transmitting an ACK/NACK signal by using compression-based grouping can be applied.

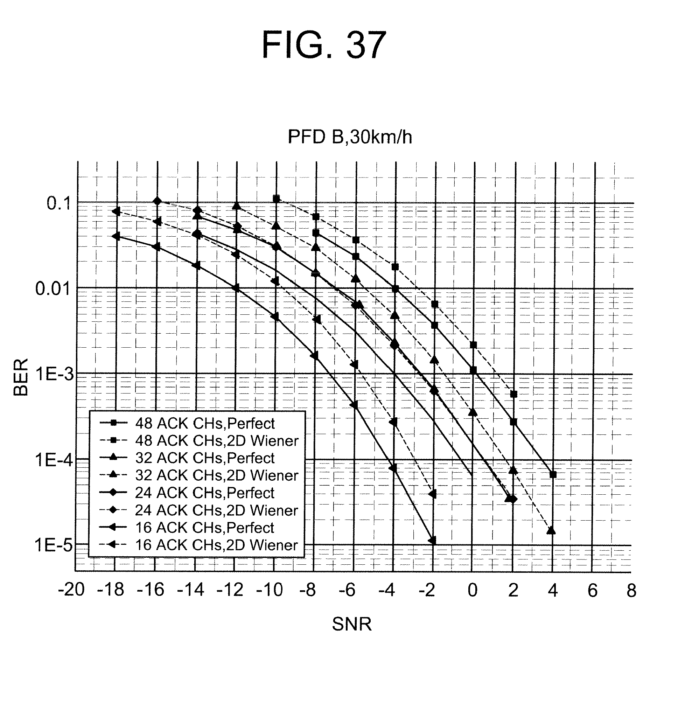

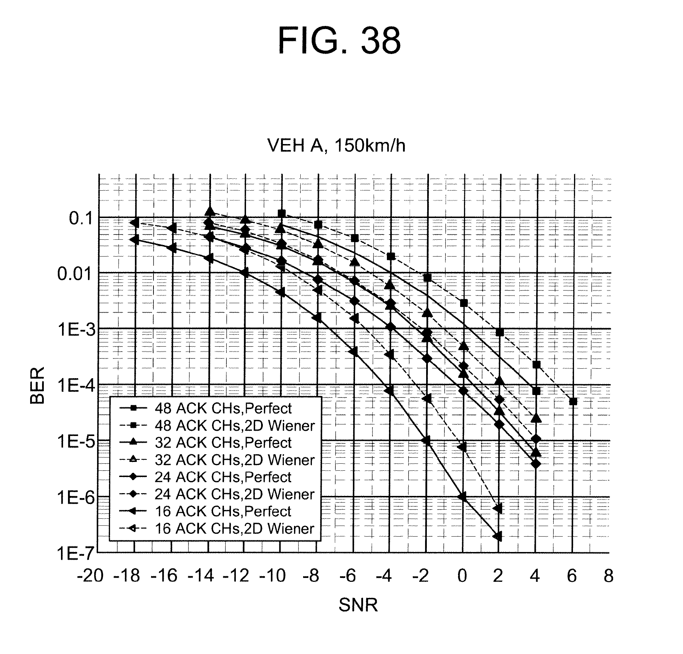

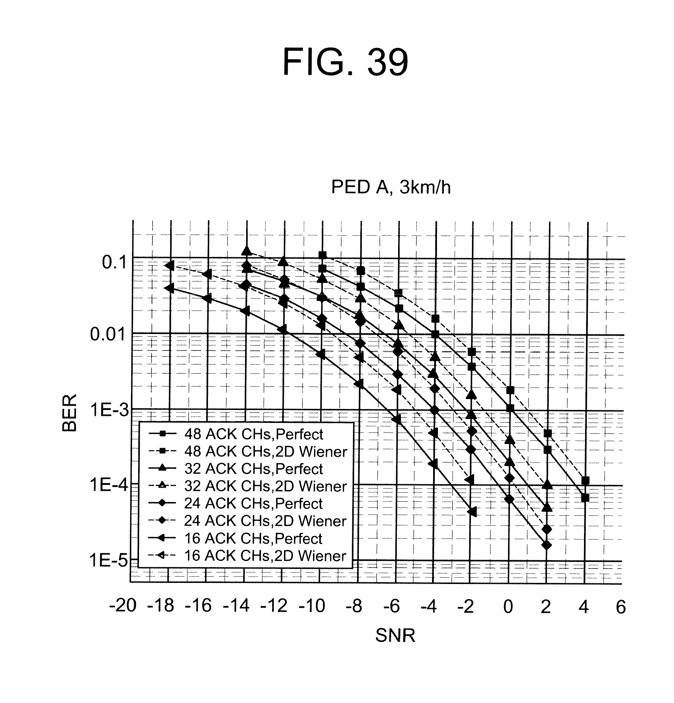

FIG. 37 is a graph for comparing system performance depending on a channel estimation scheme according to an embodiment of the present invention. FIG. 38 shows a graph for comparing system performance depending on a channel estimation scheme according to another embodiment of the present invention. FIG. 39 shows a graph for comparing system performance depending on a channel estimation scheme according to another embodiment of the present invention.

Referring to FIG. 37 to FIG. 39, system performance is represented with a bit error rate (BER) with respect to a signal to noise rate (SNR) by assuming parameters of Table 5. FIG. 37 shows a comparison result of a channel estimation method of Perfect and 2D Wiener with respect to the number of ACK channels when a moving speed is 30km/h. FIG. 38 shows a comparison result of a channel estimation method of Perfect and 2D Wiener with respect to the number of ACK channels when a moving speed is 150km/h. FIG. 39 shows a comparison result of a channel estimation method of Perfect and 2D Wiener with respect to the number of ACK channels when a moving speed is 3km/h.

**[Table 5]**

| Parameters | Assumption |
|---|---|
| Bandwidth | 10 MHz |
| Number of subcarrier | 1024 |
| Frame length | 5ms |
| Channel estimation | Perfect, 2D Wiener |
| Modulation | QPSK |
| Repetition number | 1 |
| MIMO configuration | Tx: 2, Rx:2 |
| Tx Diversity scheme | SFBC |
| Resource allocation | Distributed allocation |
| Used Resource units | 1 DRU |
| Channel model | PEDA, PEDB ,VEHA |
| MS mobility | 3km/h, 30km/h, 150km/h |
| Receiver type | Linear MMSE |

When it is assumed that transmission of a DL ACK channel has a higher requirement level than a specific control channel of another user such as resource allocation and power control, and has a lower requirement level (1e⁻² FER) than a broadcast channel, it can be seen that the DL ACK channel has performance of 1e⁻⁴ to 1e⁻³ BER.

If there are 50 active users per sector in a wireless communication system having a system bandwidth of 10MHz, a wireless access delay is 50ms, and HARQ retransmission occurs with a probability of 10%, then the maximum number of UEs allocated to one subframe is approximately 13.8 on the basis of the support of the VoIP user. If a source bit rate is 12.2kbps and a 20ms-encoder frame is considered, at least 2 resource units are required for each UE for VoIP resource allocation.

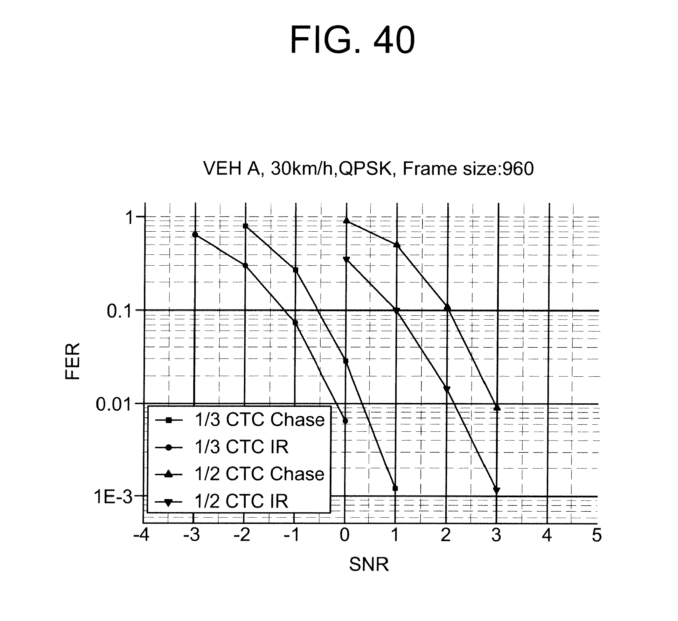

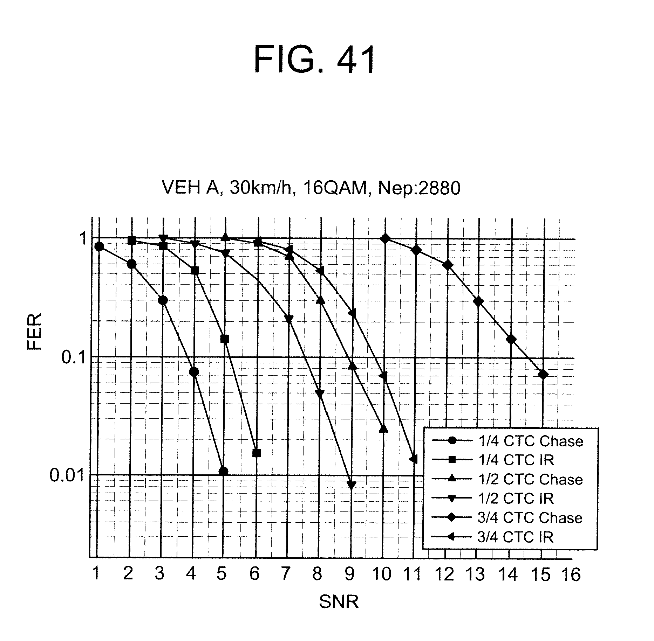

FIG. 40 is a graph for comparing performance in a chase combining (CC) mode and an incremental redundancy (IR) mode according to an embodiment of the present invention. FIG. 41 is a graph for comparing performance in a CC mode and an IR mode according to another embodiment of the present invention.

Referring to FIG. 40 and FIG. 41, FIG. 40 shows a frame error rate (FER) with respect to a signal to noise rate (SNR) in HARQ of a CC mode and an IR mode of a 1/3 convolution turbo code (CTC) and a 1/2 CRC when using a moving speed of 30km/h, QPSK modulation, and a frame size of 960 bits. FIG. 41 shows an FER with respect to an SNR in HARQ of a CC mode and an IR mode of a 1/4 CTC, a 1/2 CTC, and a 3/4 CTC when using a moving speed of 30km/h, 16QAM modulation, and Nep 2880 bits. Herein, Nep is the number of bits input to a CTC turbo encoder, and is a parameter defined with a size of an encoded packet.

The CC mode has a lower coding gain than the IR mode, but has a minimum requirement on buffer capability. The IR mode has a higher coding gain than the CC mode, but generates high implementation overhead in terms of buffer management.

Now, a UL ACK channel will be described.

### <Configuration of UL ACK channel>

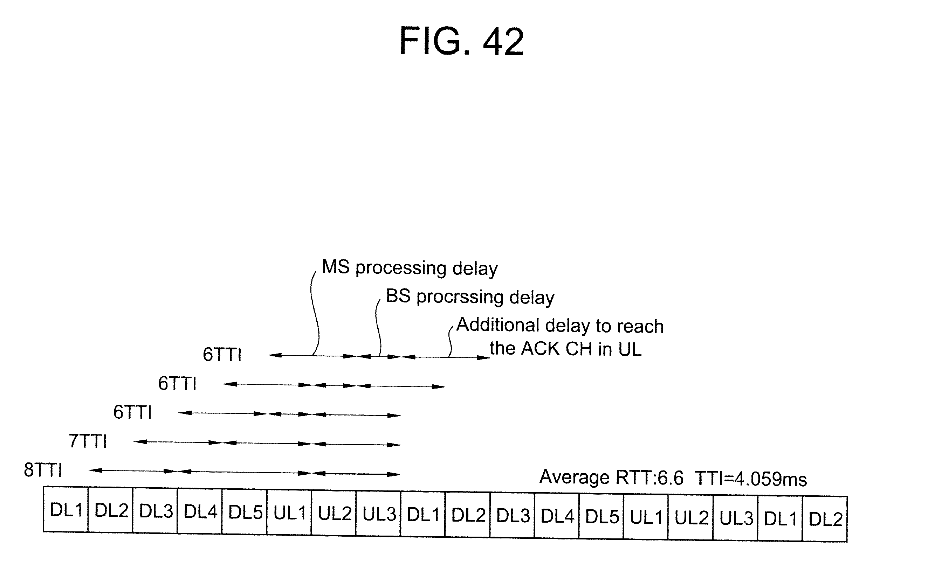

FIG. 42 shows an example of a processing delay in DL HARQ according to a frame structure. The DL HARQ is a method in which DL data is transmitted from a BS and an ACK/NACK signal is transmitted in UL in response thereto.

Referring to FIG. 42, it is assumed that a frame consists of 5 DL subframes (i.e., DL 1 to DL 5) and 3 UL subframes (i.e., UL 1 to UL 3). That is, a ratio of the DL subframe to the UL subframe included in one frame is DL:UL = 5:3. A set of DL subframes is a DL region, and a set of UL subframes is a UL region. A ratio of the DL region to the UL region is 5:3 in the frame.

Assume that a BS processing delay which is a time required for processing data by the BS is 2 subframes, and an MS processing delay which is a time required for processing data by the MS is 2 subframes. In this case, it is assumed that the 2 subframes is 2 TTI = 1.23ms. In a frame structure in which a ratio of a DL subframe to a UL subframe is DL:UL = 5:3, an average RTT for constituting an ACK channel in one frame is 6.6 TTI = 4.059ms. An ACK/NACK signal for data transmission through the subframe DL 1 is transmitted through the subframe UL 1, and thus additional delay occurs by 3 subframes. As a result, a total RTT is 8 TTI. The additional delay includes a time required to transmit the ACK/NACK signal, and may have a size of at least one subframe. An ACK/NACK signal for data transmission through the subframe DL 2 is transmitted through the subframe UL 1, and thus additional delay occurs by 2 subframes. As a result, a total RTT is 7 TTI. An ACK/NACK signal for data transmission through the subframe DL 3 is transmitted through the subframe UL 1, and thus additional delay occurs by one subframe. As a result, a total RTT is 6 TTI. An ACK/NACK signal for data transmission through the subframe DL 4 is transmitted through the subframe UL 2, and thus additional delay occurs by one subframe. As a result, a total RTT is 6 TTI. An ACK/NACK signal for data transmission through the subframe DL 5 is transmitted through the subframe UL 3, and thus additional delay occurs by one subframe. As a result, a total RTT is 6 TTI. Accordingly, an average RTT for DL data transmission through the subframes DL 1 to DL 5 is 6.6 TTI, and a UL ACK channel for this can be configured in one frame.

Although it is shown herein that 1 TTI is 0.615ms, this is for exemplary purposes only. Thus, a TTI size is not limited thereto, and can be determined variously according to a system. For example, one subframe may have a size of 1ms, i.e., 1 TTI=1ms, and if a processing delay of the BS and the MS is 2ms, an average RTT is 6.6 TTI in a frame structure in which the ratio of the DL subframe and the UL subframe is DL:UL = 5:3.

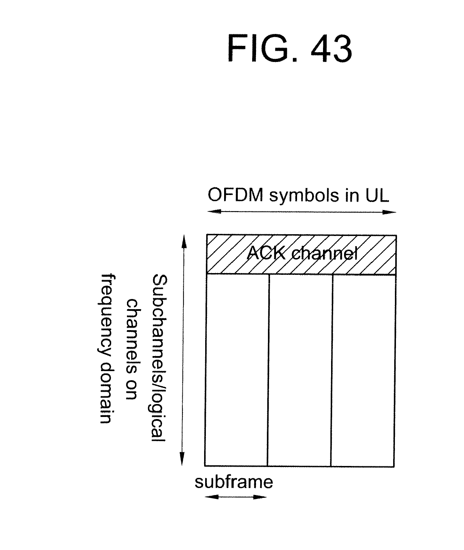

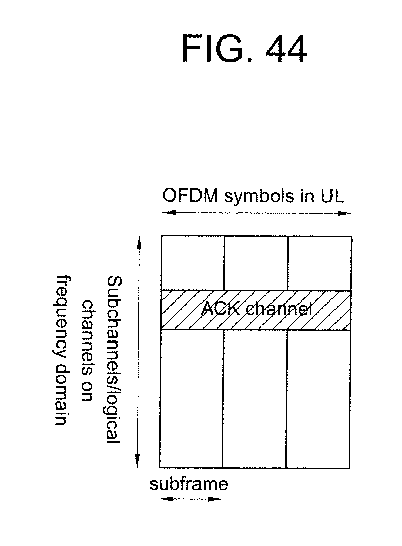

FIG. 43 shows a structure of a UL ACK channel according to an embodiment of the present invention. FIG. 44 shows a structure of a UL ACK channel according to another embodiment of the present invention. The ACK channel of FIG. 43 and the ACK channel of FIG. 44 occupy different locations in a frequency domain.

Referring to FIG. 43 and FIG. 44, the UL ACK channel may be configured in a time domain by using a UL radio resource. When a ratio of a DL subframe to a UL subframe included in one frame is DL:UL = 5:3, the UL ACK channel may include 3 UL subframes in the time domain and may include at least one logical channel in the frequency domain. One logical channel includes a plurality of subcarriers. For example, the logical channel may include at least one LRU. The logical channel may correspond to a PRU. The logical channel may include 18 subcarriers in the frequency domain.

The UL ACK channel can be allocated in any location in a logical frequency domain, and can be mapped in a physical frequency domain in a distributed or localized manner.

When the ratio of the DL subframe to the UL subframe included in one frame is DL:UL = 5:3, if the UL ACK channel is configured across the subframes UL 1 to UL 3 in the time domain, an ACK/NACK signal for data transmission through the subframes DL 1 to DL 5 can be transmitted within one frame. That is, one UL ACK channel can be configured within one frame, and all ACK/NACK signals for DL data transmission can be transmitted through one UL ACK channel. Since DL data transmission and ACK/NACK signal transmission in response to the DL data transmission can be performed in one frame, transmission delay of the ACK/NACK signal can be minimized. In addition, an MS processing delay and an additional delay may vary according to MS capability or an MS location in a cell. By configuring the ACK channel in the time domain, an ACK channel flexible to the processing delay can be configured.

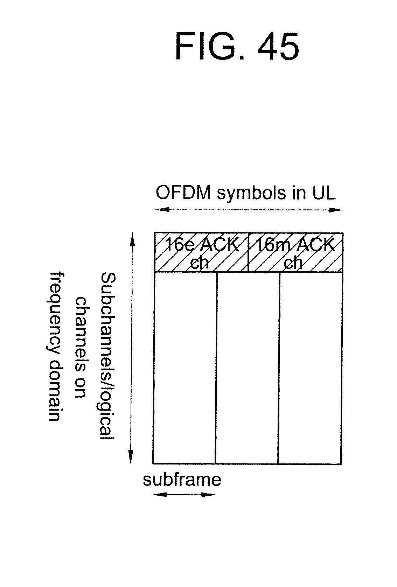

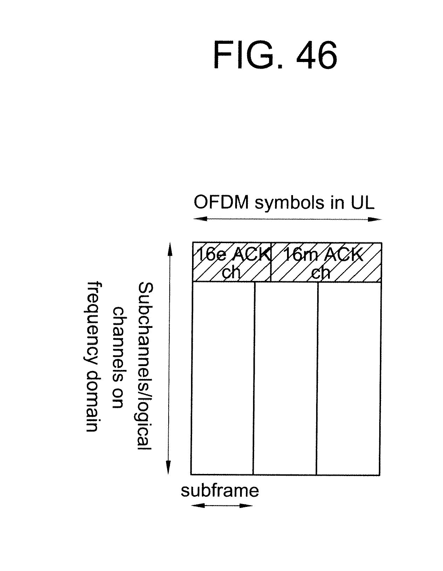

FIG. 45 shows a structure of a UL ACK channel according to another embodiment of the present invention. FIG. 46 shows a structure of a UL ACK channel according to another embodiment of the present invention. The ACK channel of FIG. 45 and the ACK channel of FIG. 46 are configured with a 16e ACK channel and a 16m ACK channel which have a different ratio from each other.

Referring to FIG. 45 and FIG. 46, the UL ACK channel includes the 16e ACK channel and the 16m ACK channel. The 16e ACK channel and the 16m ACK channel can be identified in a time domain. Although it is shown herein that the 16e ACK channel is located prior to the 16m ACK channel in the time domain, the 16m ACK channel may be located prior to the 16e ACK channel in the time domain. However, when a DL subframe for 16e is located prior to a DL subframe for 16m in the time domain, the 16e ACK channel is preferably located prior to the 16m ACK channel in the time domain when considering an MS processing delay. In addition, when the DL subframe for 16m is located prior to the DL subframe for 16e in the time domain, the 16m ACK channel is preferably located prior to the 16e ACK channel in the time domain.

A ratio of the 16e ACK channel and the 16m ACK channel can be regulated according to data transmission using HARQ in the 16e system and the 16m system and the number of ACK channels depending on the data transmission. For example, when data for an MS using the 16m system increases, a ratio of the 16m ACK channel increases as shown in FIG. 46.

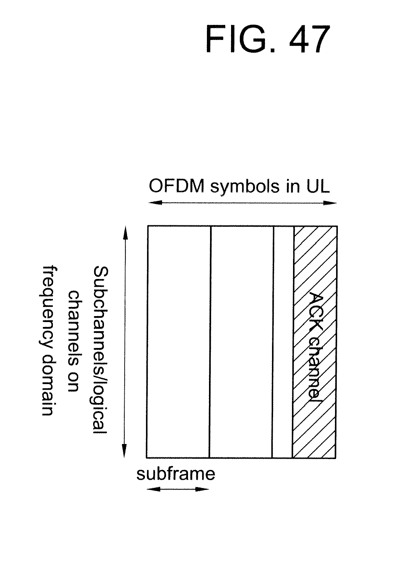

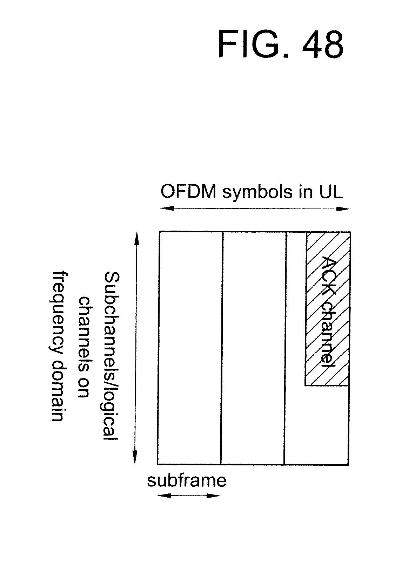

FIG. 47 shows a configuration of a UL ACK channel according to another embodiment of the present invention. FIG. 48 shows a configuration of a UL ACK channel according to another embodiment of the present invention. The ACK channel of FIG. 47 and the ACK channel of FIG. 48 are located in a last subframe in a time domain while having a different range in a frequency domain.

Referring to FIG. 47 and FIG. 48, the UL ACK channel can be located in a last subframe of a UL region. When the UL region consists of 3 subframes, the UL ACK channel can be allocated to a third subframe. The UL ACK channel in the third subframe may include at least one OFDM symbol in a last part. When the UL ACK channel is allocated to the last subframe in the time domain, an ACK/NACK signal for data transmission through the last subframe of a DL region can also be transmitted through a UL ACK channel of the same frame. When the UL ACK channel is allocated in the last subframe of the UL region, a maximum delay margin can be provided for an ACK channel processing time and generation time of an MS that uses HARQ.

An ACK channel allocated to the last subframe may include all logical channels in a frequency domain as shown in FIG. 47, and may include some logical channels as shown in FIG. 48. The logical channel included in the ACK channel may be regulated according to the number of data channels that use HARQ or may be predetermined.

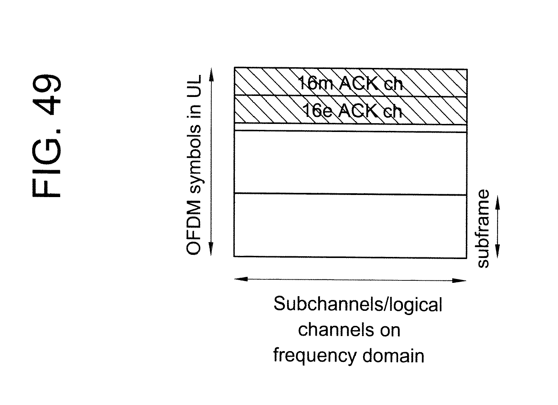

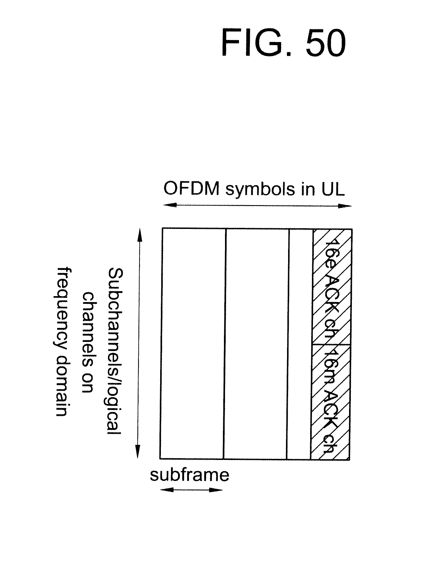

FIG. 49 shows a configuration of a UL ACK channel according to another embodiment of the present invention. FIG. 50 shows a configuration of a UL ACK channel according to another embodiment of the present invention. The ACK channel of FIG. 49 and the ACK channel of FIG. 50 are located in a last subframe in a time domain. In the ACK channel of FIG. 49, a 16e ACK channel and a 16m ACK channel are identified in the time domain. In the ACK channel of FIG. 50, the 16e ACK channel and the 16m ACK channel are identified in a frequency domain.

Referring to FIG. 49 and FIG. 50, an ACK channel located in a last subframe of a UL region may include the 16e ACK channel and the 16m ACK channel. The 16e ACK channel can be identified in the time domain as shown in FIG. 49, and can be identified in the frequency domain as shown in FIG. 50.

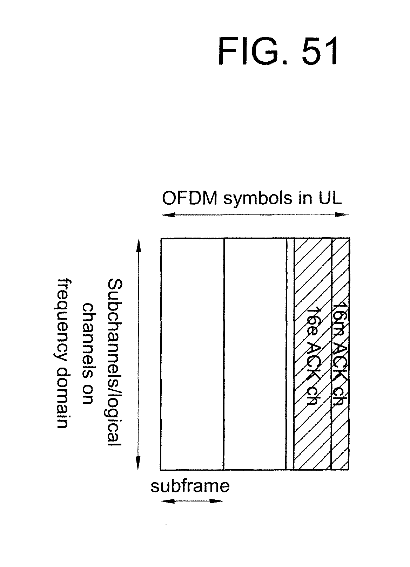

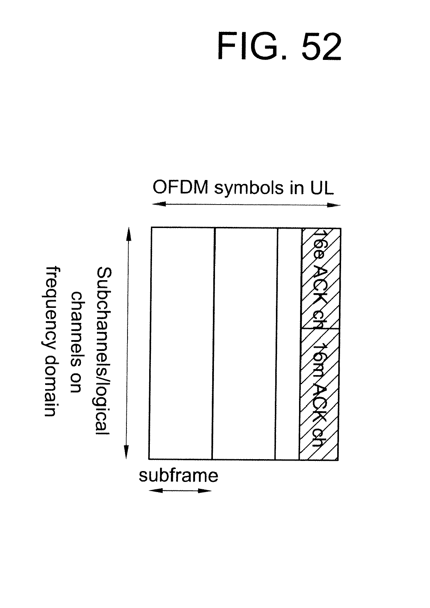

FIG. 51 shows a configuration of a UL ACK channel according to another embodiment of the present invention. FIG. 52 shows a configuration of a UL ACK channel according to another embodiment of the present invention. The ACK channel of FIG. 51 includes a 16e ACK channel and a 16m ACK channel having a different ratio from that of the ACK channel of FIG. 49. The ACK channel of FIG. 52 includes a 16e ACK channel and a 16m ACK channel having a different ratio from that of the ACK channel of FIG. 50.

Referring to FIG. 51 and FIG. 52, as shown in FIG. 51, the ACK channel may be located in the last subframe of the UL region, and may include the 16e ACK channel and the 16m ACK channel by identifying them in the time domain. A ratio of the 16e ACK channel and the 16m ACK channel can be regulated in the time domain. As shown in FIG. 52, the ACK channel may be located in the last subframe of the UL region, and may include the 16e ACK channel and the 16m ACK channel by identifying them in the frequency domain. A ratio of the 16e ACK channel and the 16m ACK channel can be regulated in the frequency domain. The ratio of the 16e ACK channel and the 16m ACK channel may be regulated according to data transmission using HARQ in the 16e system and the 16m system and the number of ACK channels depending on the data transmission.

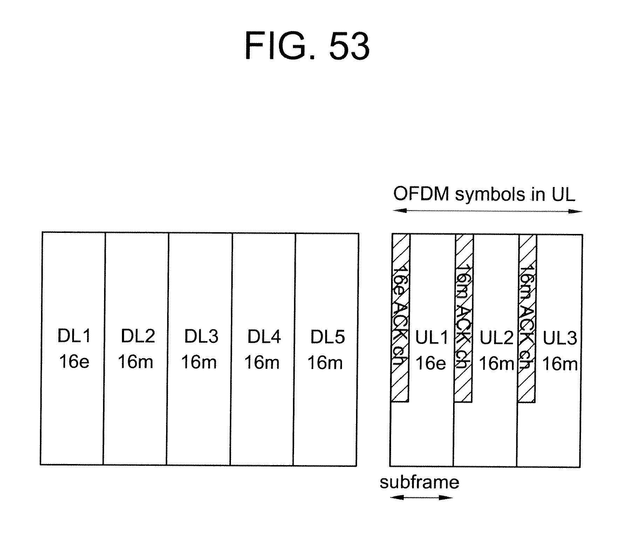

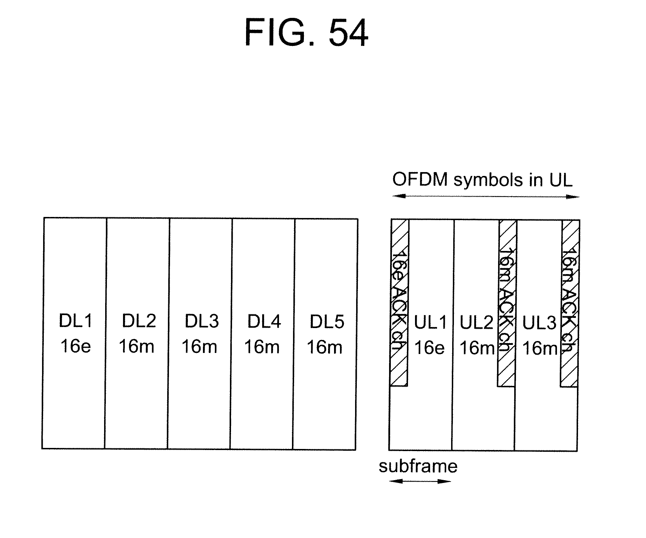

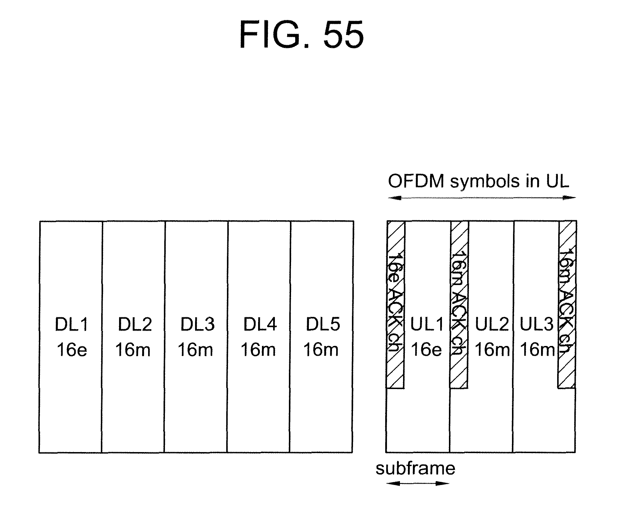

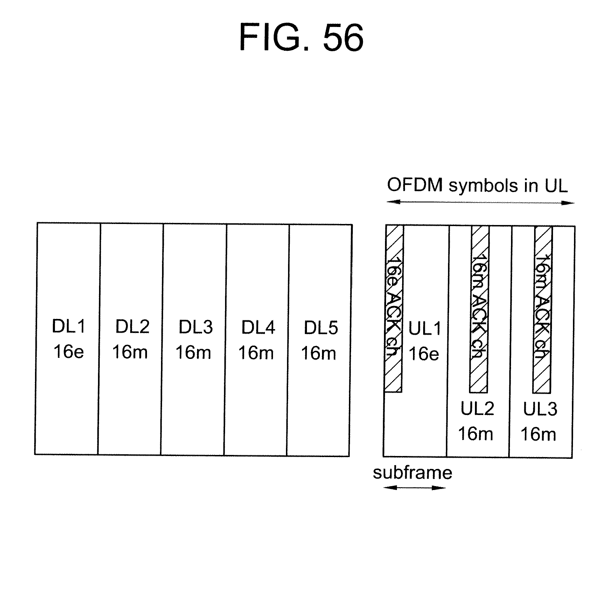

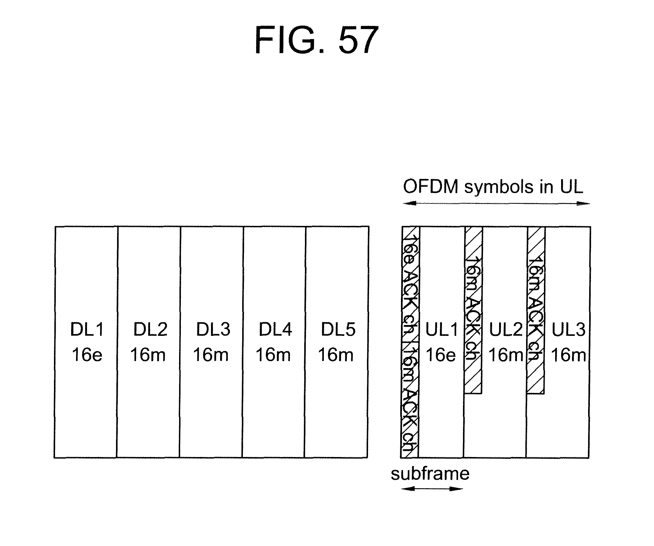

FIG. 53 shows a configuration of a UL ACK channel according to another embodiment of the present invention. FIG. 54 shows a configuration of a UL ACK channel according to another embodiment of the present invention. FIG. 55 shows a configuration of a UL ACK channel according to another embodiment of the present invention. FIG. 56 shows a configuration of a UL ACK channel according to another embodiment of the present invention. FIG. 57 shows a configuration of a UL ACK channel according to another embodiment of the present invention.

Referring to FIG. 53 to FIG. 57, a DL region includes 5 DL subframes, i.e., DL 1 to DL 5, and a UL region includes 3 UL subframes, i.e., UL 1 to UL 3. The subframe DL 1 may be allocated for a 16e system, and the subframes DL 2 to DL 5 may be allocated for a 16m system. A 16e ACK channel may be allocated to the subframe UL 1, and a 16m ACK channel may be allocated to the subframes UL 2 and UL 3.

The 16e ACK channel and the 16m ACK channel may occupy a part or the entirety of a logical channel in a frequency domain. Further, the 16e ACK channel and the 16m ACK channel may be allocated in each subframe in a time domain as follows.
(1) As shown in FIG. 53, the 16e ACK channel and the 16m ACK channel can be allocated in a front portion of each subframe so as to transmit an ACK/NACK signal more rapidly.
(2) As shown in FIG. 54, the 16e ACK channel can be allocated in a front portion of a subframe, and the 16e ACK channel can be allocated in a rear portion of the subframe. The 16e ACK channel allocated in the rear portion of the subframe in the time domain can provide a maximum delay margin to an MS using the 16m system with respect to an ACK channel processing time and generation time.
(3) As shown in FIG. 55, the 16e ACK channel may be allocated in a front portion of a subframe, and one of 16m ACK channels may be allocated to the front portion of the subframe and the other may be allocated to a rear portion of the subframe. The ACK channel may be located in a subframe by considering an MS processing delay in each subframe.
(4) As shown in FIG. 56, a 16e ACK channel may be allocated to a front portion of a subframe, and a 16m ACK channel may be allocated in a middle portion of the subframe. The ACK channel may be located in a subframe by considering an MS processing delay in each subframe.
(5) As shown in FIG. 57, a 16e ACK channel may be allocated in a front portion of a subframe by occupying a part of a logical channel in a frequency domain, and a 16m ACK channel may be allocated in the front portion of the subframe while being consecutively arranged to the 16e ACK channel of a subframe UL 1 in a frequency domain, thereby further occupying the remaining parts of the logical channel. According to a ratio of a subframe allocated to a 16e system and a 16m system in DL and an MS processing delay, a configuration of the 16e ACK channel and the 16m ACK channel can be regulated.

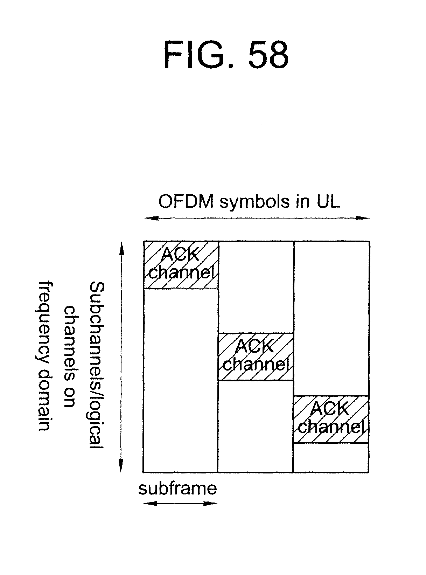

FIG. 58 shows a configuration of a UL ACK channel according to another embodiment of the present invention.

Referring to FIG. 58, a logical channel having a high channel reliability can be allocated to a UL ACK channel in each UL subframe. The logical channel having the high reliability implies a channel having a relatively good channel state of a corresponding physical channel. In each subframe, the ACK channel may use all of OFDM symbols belonging to the subframe or may use some of the OFDM symbols. The logical channel having the high reliability may differ for each UL subframe, and thus the ACK channel may occupy a different location in a frequency domain in each UL subframe. Therefore, the ACK channel may vary in a UL subframe according to a channel state, and allocation information of the ACK channel may be transmitted through higher-layer signaling.

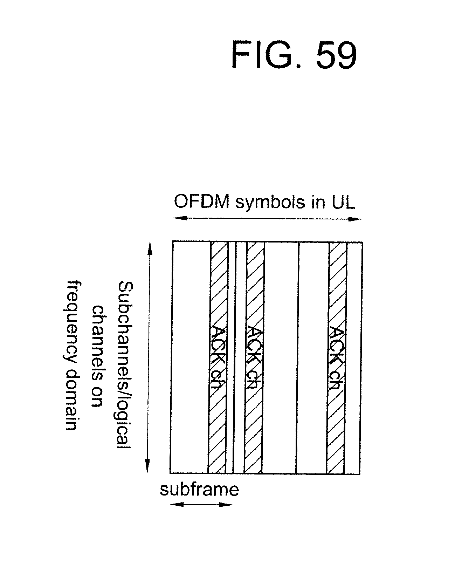

FIG. 59 shows a configuration of a UL ACK channel according to another embodiment of the present invention.

Referring to FIG. 59, at least one OFDM symbol having a high channel reliability can be allocated to the UL ACK channel in each UL subframe. The UL ACK channel may include at least one OFDM symbol in a time domain, and may include at least one logical channel in a frequency domain. That is, the UL ACK channel may include a part or the entirety of a logical channel.

Similarly to FIG. 58 and FIG. 59, a method of allocating an ACK channel to an OFDM symbol or a logical channel having a high channel reliability can also apply to the ACK channel configuration of FIG. 43 to FIG. 57.

Although a configuration of a UL ACK channel in a TDD frame in which a DL region and a UL region are divided in a time domain has been described above, the technical features of the aforementioned UL ACK channel arrangement and configuration can also equally apply to a DL ACK channel configuration in the TDD frame. In addition, the technical features of the present invention can also apply to an FDD frame in which the DL region and the UL region are divided in a frequency domain by configuring an ACK channel such that the ACK channel has a temporal processing delay with respect to a region for data transmission.

### <Fast HARQ operation>

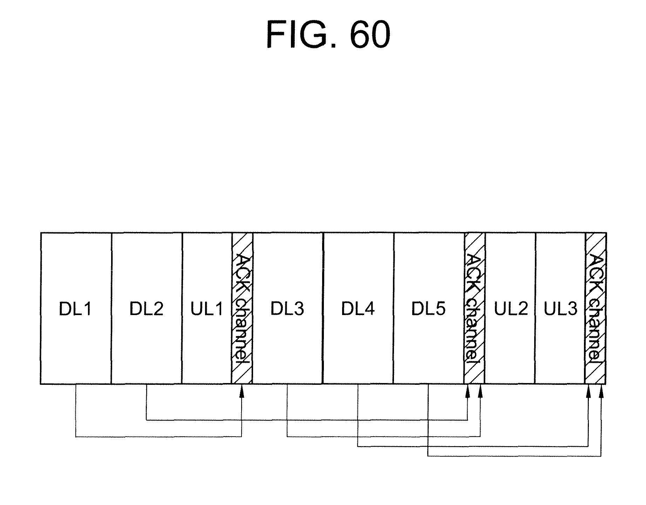

FIG. 60 shows a frame structure capable of performing fast HARQ according to an embodiment of the present invention.

Referring to FIG. 60, it is assumed that a frame includes 5 DL subframes, i.e., DL 1 to DL 5, and 3 UL subframes, i.e., UL 1 to UL 3.

In order to minimize a delay of an ACK/NACK signal for each subframe while transmitting all UL ACK/NACK signals in the same frame with respect to DL data transmitted through one frame, locations of a UL subframe and a DL subframe can be switched. That is, a location of at least one UL subframe among a plurality of UL subframes can be arranged to a location between a plurality of DL subframes.

As illustrated in the figure, the subframe UL 1 can be switched to a location between the subframes DL 2 and DL 3. An ACK/NACK signal for the subframe DL 1 may be transmitted through an ACK channel of the subframe UL 1, an ACK/NACK signal for the subframes DL 2 and DL 3 may be transmitted through an ACK channel of the subframe UL 2, and an ACK/NACK signal for the subframes DL 4 and DL 5 may be transmitted through an ACK channel of the subframe UL 3. In this case, the ACK channel of the subframe UL 1 can be temporally located in a last portion of the subframe UL 1 by considering an MS processing delay. Since the ACK channel of the subframe UL 2 has a sufficient processing delay with respect to the subframes DL 2 and DL 3, the ACK channel can be temporally located in a front portion of the subframe UL 2. The ACK channel of the subframe UL 3 can be temporally located in a last portion of the subframe UL 3 by considering the MS processing delay.

As such, by switching a DL subframe and a UL subframe in a TDD-type frame, the delay of the ACK/NACK signal for DL data transmission can be reduced. Information on the switching of the DL subframe and the UL subframe can be transmitted using higher-layer signaling or system information on a frame structure. Although DL HARQ has been described herein, the delay of the ACK/NACK signal can also be reduced in UL HARQ by switching the DL subframe and the UL subframe in the same manner.

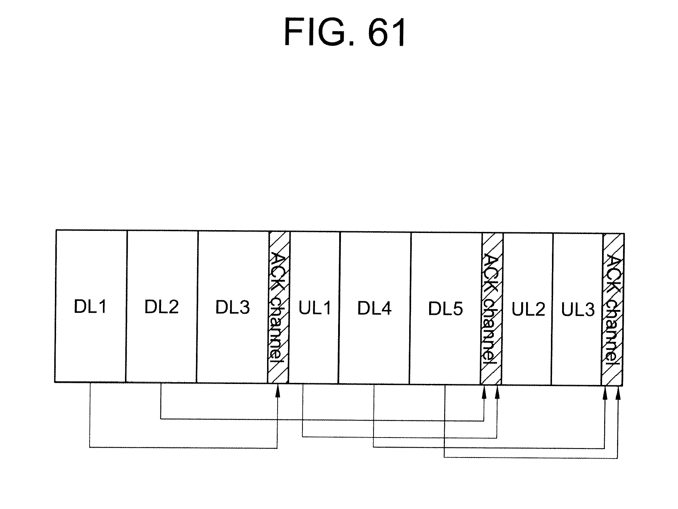

FIG. 61 shows a frame structure capable of performing fast HARQ according to another embodiment of the present invention.

Referring to FIG. 61, the frame structure is a structure in which a subframe UL 1 is switched to a location between subframes DL 3 and DL 4 in a frame including 5 DL subframes (i.e., DL 1 to DL 5) and 3 UL subframes (i.e., UL 1 to UL 3).

An ACK/NACK signal for the subframe DL 1 may be transmitted through an ACK channel of the subframe UL 1, an ACK/NACK signal for the subframes DL 2 and DL 3 may be transmitted through an ACK channel of the subframe UL 2, and an ACK/NACK signal for the subframes DL 4 and DL 5 may be transmitted through an ACK channel of the subframe UL 3. In this case, since the ACK channel of the subframe UL 1 has a sufficient processing delay, it can be temporally located in a front portion of the subframe UL 1. Since the ACK channel of the subframe UL 2 has a sufficient processing delay with respect to the subframes DL 2 and DL 3, it can be temporally located in a front portion of the subframe UL 2. The ACK channel of the subframe UL 3 can be temporally located in a last portion of the subframe UL 3 by considering an MS processing delay.

Switching between a DL subframe and a UL subframe for performing fast HARQ can be achieved variously according to an MS processing delay level, and there is no restriction on a location to which the UL subframe or the DL subframe is switched.

Although the aforementioned descriptions have been made by distinguishing a UL ACK channel and a DL ACK channel, a configuration and mapping method of the ACK channel is not limited to UL and DL. Thus, a configuration and mapping method of the UL ACK channel can also apply to the DL ACK channel, and a configuration and mapping method of the DL ACK channel can also apply to the UL ACK channel.

According to the present invention, information on an acknowledgement (ACK) channel allocated to a mobile station can be effectively reported, and a delay of ACK/non-acknowledgement (NACK) signal transmission can be decreased.

All functions described above may be performed by a processor such as a microprocessor, a controller, a microcontroller, and an application specific integrated circuit (ASIC) according to software or program code for performing the functions. The program code may be designed, developed, and implemented on the basis of the descriptions of the present invention, and this is well known to those skilled in the art.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of transmitting an acknowledgement (ACK)/non-acknowledgement (NACK) signal in a wireless communication system, the method comprising:
allocating a radio resource; and
transmitting the ACK/NACK signal through an ACK channel in a location determined by an index for the radio resource,
wherein the radio resource comprises at least one resource unit which is a basic unit for resource allocation, the resource unit is at least one of a localized resource unit comprising subcarriers contiguous in a frequency domain and a distributed resource unit comprising subcarriers distributed in the frequency domain, an index of the localized resource unit is directly mapped to an index of the ACK channel, and an index of the distributed resource unit is mapped to an index of the ACK channel according to a permutation rule.

2. The method of claim 1, wherein the localized resourced resource unit and the distributed resource unit are mapped to an index of a logical resource unit and are then mapped to the index of the ACK channel.

3. The method of claim 1, wherein the radio resource is an uplink or downlink resource unit allocated to a mobile station.

4. The method of claim 1, wherein the radio resource is an uplink control block allocated to a mobile station.

5. A method of transmitting an acknowledgement (ACK)/non-acknowledgement (NACK) signal in a wireless communication system, the method comprising:
transmitting and receiving data by using a radio resource; and
receiving the ACK/NACK signal through an ACK channel indicated by index information of the radio resource,
wherein the radio resource comprises at least one resource unit which is a basic unit for resource allocation, the resource unit is at least one of a localized resource unit comprising subcarriers contiguous in a frequency domain and a distributed resource unit comprising subcarriers distributed in the frequency domain, and an index of the ACK channel is directly mapped from an index of the localized resource unit and is mapped by being permutated from an index of the distributed resource unit.

6. The method of claim 5, wherein ACK/NACK signals of a plurality of users are transmitted through the ACK channel by being multiplexed using code division multiplexing (CDM)/frequency division multiplexing (FDM).

7. The method of claim 5, wherein ACK/NACK signals of a plurality of users are transmitted through the ACK channel by being multiplexed using frequency division multiplexing (FDM).

8. A method of transmitting an acknowledgement (ACK)/non-acknowledgement (NACK) signal using a frame comprising a plurality of downlink subframes and a plurality of uplink subframes in a wireless communication system, the method comprising:
transmitting data by using the uplink subframe; and
receiving the ACK/NACK signal for the data through an ACK channel included in the plurality of downlink subframes, wherein the ACK channel is included by multiplexing ACK channels for the plurality of user, and the ACK channels for the plurality of users are identified according to a resource block allocated to the users.

9. The method of claim 8, wherein the ACK channel is included in an ACK channel group comprising a plurality of ACK channels for the plurality of users.

10. The method of claim 8, wherein the ACK channel is mapped to subcarriers distributed in a frequency domain.

11. The method of claim 8, wherein the ACK channel is multiplexed by combining the ACK channels for the plurality of users by being combined using an orthogonal sequence.

12. The method of claim 8, wherein the downlink subframe comprises a sub-MAP containing allocation information of the ACK channel.
